# EUROPEAN PATENT SPECIFICATION

(11) **EP 2 042 571 B1**
(45) Date of publication and mention of the grant of the patent: **14.03.2012**
(21) Application number: 08015830.6
(22) Date of filing: 09.09.2008
(51) Int. Cl.: C09D 11/10

(54) **Ink composition**
Tintenzusammensetzung
Composition d'encre

(30) Priority: 28.09.2007 JP 2007256303
(43) Date of publication of application: 01.04.2009
(73) Proprietor: FUJIFILM Corporation, Tokyo 106-0031 (JP)
(72) Inventor: Yokoi, Kazuhiro, Ashigarakami-gun Kanagawa (JP)
(74) Representative: HOFFMANN EITLE

(56) References cited:
- EP-A- 1 614 727
- WO-A-03/099947
- WO-A-2005/045523
- WO-A-2006/008251

## Description

### BACKGROUND OF THE INVENTION

### Field of the Invention

The present invention relates to an ink composition. More particularly, it relates to an ink composition that cures in high sensitivity by irradiation with a radiation ray, can form an image without tackiness on the surface of the image, and is preferable for inkjet recording.

Image recording methods for forming an image based on image data signals on a recording medium such as paper include methods such as an electrophotographic method, a sublimation or fusion heat-transfer method, and an inkjet method. Among these, the inkjet method can be carried out using an inexpensive device, wherein the image is directly formed by ejecting ink only onto a desired image region on the recording medium, thus enabling an efficient use of ink and resulting in low running costs. In addition, the inkjet method generates little noise and is superior as an image recording method.

The inkjet method can be applied for printing not only on plain paper but also on a non-water absorptive recording medium such as a plastic sheet or a metal plate. However, higher speed and higher image quality at the time of printing are important issues, and the time period needed for drying and curing ink droplets after ejection has a great influence on printing efficiency and sharpness of a printed image.

One of such inkjet recording methods is a method using an inkjet recording ink which is curable by irradiation with a radiation ray. In this method, printing efficiency can be improved and a sharp image can be obtained, by curing droplets by irradiating with a radiation ray immediately, or a given period of time, after the ejection.

By achieving higher sensitivity of inkjet recording ink which is curable by irradiation with a radiation ray such as an ultraviolet ray, the ink can be imparted with higher hardening properties, and thus many benefits can be obtained, such as improved inkjet recording efficiency, reduced power consumption, longer lifetime due to a reduced load on a radiation ray generator, and prevention of evaporation of low-molecular substances due to insufficient hardening. In addition, improvement in sensitivity is effective in increasing the strength of the image formed with the inkjet recording ink and, in particular, in the case of preparation of planographic printing plates, it may increase the hardness of the image region and printing durability.

Such inkjet methods using an ink composition which is curable by a radiation ray such as an ultraviolet ray have attracted attention recently for being relatively odorless, quick in drying, and capable of recording on a recording medium having reduced ink absorbency. Ultraviolet ray curable ink compositions for inkjet recording utilizing radical polymerization have been disclosed. While such radically polymerizable inks are superior in curing speed and can form an image without ink bleeding, they have had a problem in that adhesion to a recording medium deteriorates due to volume shrinkage during hardening.

### Description of the Related Art

Accordingly, for the purpose of improving the adhesion to a recording medium, cationically polymerizable ink compositions resistant to shrinkage during ultraviolet ray curing have been proposed (see, for example, Japanese Patent Application Laid-Open (JP-A) No. 9-183928). However, these cationically polymerizable inks have insufficient stability during storage because of the reaction of acids generated therein over time, which is a significant obstacle to commercialization of such inks. For improvement of the storage stability, technologies of adding a basic compound or a thermal base-generating agent have been proposed (see, for example, JP-A Nos. 2003-312121, 2003-341217 and 2004-91558). Further related art can be found in WO 2005/045523, WO 03/099947, EP 1614727 and WO 2006/008251.
However, a new problem has emerged in that the curing sensitivity of the ink is lowered due to the basic compound inhibiting the function of the acid generated by light exposure.

Furthermore, in the case of the cationically polymerizable ink, when a low molecular weight basic compound as a stabilizer remains unreacted after image formation, the compound oozes on the surface of an image, inducing tackiness on the surface of an image. For this reason, it is strongly desired to improve tack sensitivity.

### SUMMARY OF THE INVENTION

The present invention has been made in view of the above circumstances and provides an ink composition.

A first aspect of the present invention provides an ink composition comprising (a) a tertiary amine compound having a hindered amine structure as a tertiary amine structure, and having a cationically polymerizable group comprising a vinyl ether group, an epoxy group or an oxetane group (b) a photo-acid generator, and (c) a cationically polymerizable compound.

### DETAILED DESCRIPTION OF THE INVENTION

An object of the present invention which has been made in consideration with the above problems is to provide an ink composition in which generation of tackiness on the surface of an image formed is effectively suppressed while maintaining curing sensitivity to irradiation with a radiation ray, blocking is not generated even where prints after image formation are laminated, and ejection property in applying to an inkjet apparatus is good.

The ink composition of the invention forms an image having high image quality and excellent strength when used in general printing, thereby not only a high quality print is obtained, but it can preferably be used in the production of a resist, a color filer or an optical disk. Thus, the ink composition is useful as an optical molding material.

Furthermore, by applying an inkjet recording method, the ink composition cures in high sensitivity even on a non-absorptive recording medium, and an image region without tackiness on the surface thereof can directly be formed based on digital data. Therefore, even in the case where prints formed using the ink composition of the invention are laminated after printing, blocking due to tackiness of an ink image is suppressed.

### [Ink composition]

The ink composition of the present invention comprises (a) a tertiary amine compound having a hindered amine structure as a tertiary amine structure, and having a cationically polymerizable group comprising a vinyl ether group, an epoxy group or an oxetane group, (b) a photo-acid generator, and (c) a cationically polymerizable compound. If desired and necessary, the ink composition may further comprise (d) a colorant.

The "radiation ray" used herein is not particularly limited so long as it is an active radiation ray that can impart energy capable of generating initiation species in an ink composition by its irradiation, and is an active radiation ray widely encompassing α-ray, γ-ray, X-ray, an ultraviolet ray, a visible light, electron beams and the like. Above all, an ultraviolet ray and electron beams are preferred from the standpoints of curing sensitivity and easy availability of an apparatus, and an ultraviolet ray is particularly preferred. Therefore, the ink composition of the present invention is preferably an ink composition which can cure by irradiation with an ultraviolet ray as a radiation ray.

A radiation (such as ultraviolet ray) curable, cationically polymerizable ink composition is advantageous in the point of film properties, sensitivity and the like as compared with a radically polymerizable ink composition. However, the radiation curable, cationically polymerizable ink composition does not undergo inhibition of polymerization by oxygen, and this gives rise to the problem on stability to heat or light.

In the ink composition of the present invention, the basic compound as a stabilizer has a polymerizable group. Therefore, the ink composition rapidly cures without decreasing sensitivity, and additionally the basic compound is fixed in an image due to the polymerizable group. As a result, the low molecular weight basic compound does not ooze on the surface of the image, tackiness on the surface is effectively suppressed, thereby tack sensitivity is improved, and additionally, even though prints having an image formed by the ink composition of the present invention are laminated, generation of blocking due to tackiness of the ink image can be suppressed.

The mechanism of action which develops such an effect is not clarified, but it is considered as follows. Due to (a) an amine structure in the tertiary amine compound having a cationically polymerizable group, in the case where exposure is not conducted, the amine structure effectively traps a slight amount of an undesirable acid generated from (b) the photo-acid generator to suppress a curing reaction. On the other hand, where sufficient exposure was conducted, the tertiary amine compound cures together with (c) the adjacent cationically polymerizable compound by an acid due to the cationically polymerizable group in the tertiary amine compound, and is fixed in an image region formed by curing an ink, and generation of tackiness on the surface due to oozing of the low molecular weight tertiary amine compound is effectively suppressed without generation of bleeding on the surface.

Each constituent component used in the ink composition of the present invention is subsequently described below.

### [(a) Tertiary amine compound having cationically polymerizable group]

(a) the tertiary amine compound having a cationically polymerizable group (hereinafter referred to as a "polymerizable amine compound" accordingly) which is the characteristic component used in the present invention is described below.

The polymerizable amine compound in the present invention is a tertiary amine compound having a hindered amine structure as a tertiary amine structure, and having a cationically polymerizable group comprising a vinyl ether group, an epoxy group or an oxetane group . The tertiary amine structure may be present only one or in plural in the molecule. The number of the tertiary amine structure in one molecule is preferably 1 to 4, and more preferably 1 to 3, from the standpoints of suppression of increase in initial viscosity and suppression of yellow coloration.

The form of the tertiary amine structure is a so-called hindered amine compound having a basic nitrogen atom having a large steric hindrance from the standpoint that an acid generated in slight amount can be trapped without hindering the growth reaction of cationic polymerization, thereby maintaining high sensitivity and improving stability over time.

Such a hindered amine structure includes a structure in which a basic nitrogen atom has a sufficient steric hindrance to decrease reactivity to a cation terminal. Steric hindrance occurs by that many molecules are present around the basic nitrogen atom, for example, the basic nitrogen atom having a bulky substituent, and a factor hindering a cationic polymerization reaction as a basic compound is reduced. Therefore, a tertiary amine compound having a large steric hindrance is particularly preferred. In general, it is considered that where sufficient steric hindrance is not obtained, the degree of polymerization of a polymer formed in a cured film by chain transfer in the system is decreased, resulting in decrease in sensitivity. However, in the present invention, the amine compound itself has cationic polymerizability. As a result, there are no concerns of chain transfer and the like, and the amine compound contributes to a curing reaction together with the adjacent cationically polymerizable compound by imparting energy. Therefore, this can be said to be a preferred embodiment from the standpoint of sensitivity.

It is considered that due to such a hindered amine structure, the growth reaction of cation terminal during a cationic polymerization reaction at a basic site is not hindered by steric hindrance when generally cured by exposure while maintaining a function of trapping a slight amount of an undesired acid generated by heat or light, differing from the basic compound conventionally used, and as a result, progress of polymerization is not suppressed, which does not induce decrease in sensitivity.

Preferred examples of the tertiary amine structure in the polymerizable amine compound (a) include structures represented by any one of the following formulae I to VII.

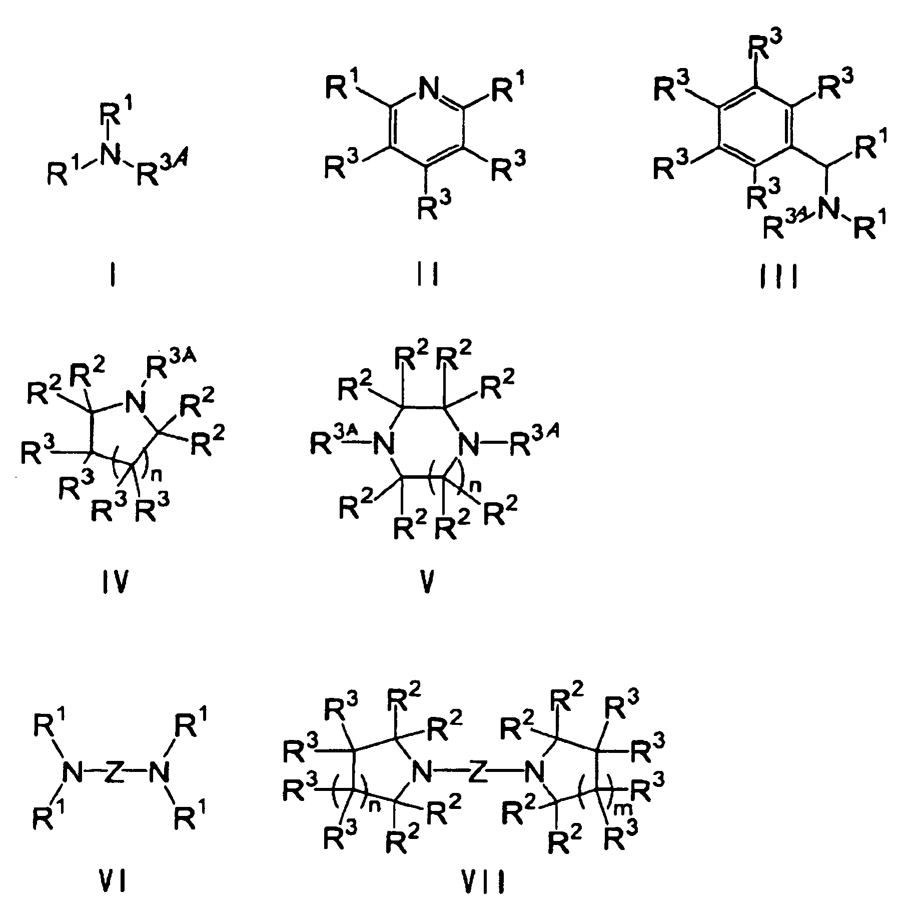

R¹ represents a branched alkyl group having 3 to 8 carbon atoms (such as isopropyl, isobutyl, tert-butyl or isopentyl), a cyclic alkyl group having 3 to 10 carbon atoms (such as cyclopentyl or cyclohexyl), or an aralkyl group having 7 to 20 carbon atoms. R² represents a linear alkyl group having 1 to 4 carbon atoms, a branched alkyl group having 3 to 6 carbon atoms, or an aryl group having 6 to 12 carbon atoms. R³ represents a hydrogen atom, a linear alkyl group having 1 to 20 carbon atoms, a branched alkyl group having 3 to 6 carbon atoms, a cyclic alkyl group having 3 to 10 carbon atoms, an aryl group having 6 to 12 carbon atoms, an aralkyl group having 7 to 20 carbon atoms, or an alkenyl group having 2 to 20 carbon atoms. R^{3A} represents a linear alkyl group having 1 to 20 carbon atoms, a branched alkyl group having 3 to 6 carbon atoms, a cyclic alkyl group having 3 to 10 carbon atoms, an aryl group having 6 to 12 carbon atoms, an aralkyl group having 7 to 20 carbon atoms, or an alkenyl group having 2 to 20 carbon atoms.

R¹ and R² that are present in plural in one molecule may be the same or different from each other or may bond to each other to form a cyclic structure. Z represents a divalent organic group comprising a hydrocarbon, n and m are an integer of 1 to 3.

More preferred structure is a hindered amine structure having an alkyl-substituted structure represented by the above formulae I or IV.

It is enough that the cationically polymerizable group in (a) the polymerizable amine compound is present at least one in one molecule, and at two or more cationically polymeraizable groups may be present. The plural cationically polymerizable groups may be the same, or different polymerizable groups may be present. The number of the cationically polymerizable groups in one molecule is preferably 1 to 4, and more preferably 1 to 3, from the standpoint of suppressing increase in initial viscosity.

The cationically polymerizable group is a vinyl ether group, an epoxide or an oxetane group from the standpoints of copolymerization reactivity with a cationically polymerizable monomer in an ink and synthesis suitability.

The bonding embodiment between the tertiary amine structure and the cationically polymerizable group is optional. For example, one or more cationically polymerizable groups may bond to the amine structure, such as the embodiment that the cationically polymerizable group bonds to nitrogen atom constituting a ring in a cyclic amine structure, or the embodiment that the cationically polymerizable group bonds to the optional position of carbon atom constituting a ring in a cyclic amine structure, and one or plural tertiary amine structures may bond to one cationically polymerizable group, such as the embodiment that one or more tertiary amine structures are present on carbon atom constituting an epoxy ring or an oxetane ring.

Furthermore, the tertiary amine structure and the cationically polymerizable group may bond directly, or through an appropriate connecting group. Examples of the appropriate connecting group include a linear alkylene group having 1 to 10 carbon atoms, a branched alkylene group, an alkyleneoxy group having 1 to 8 carbon atoms, and an aralkyl group having 1 to 12 carbon atoms, which may have a heteroatom as a substituent. More preferred example is an alkylene group having 1 to 6 carbon atoms.

Specific examples of the polymerizable amine compound (a) include the exemplary compounds (A-1) to (A-33) shown below, but the present invention is not limited to these

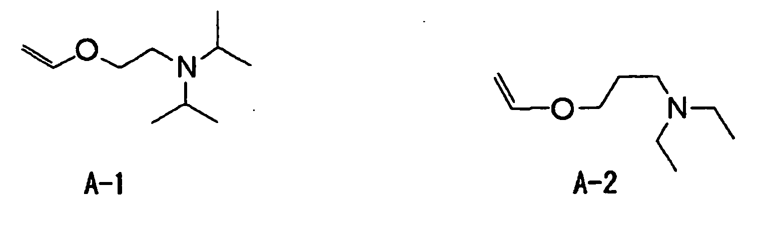

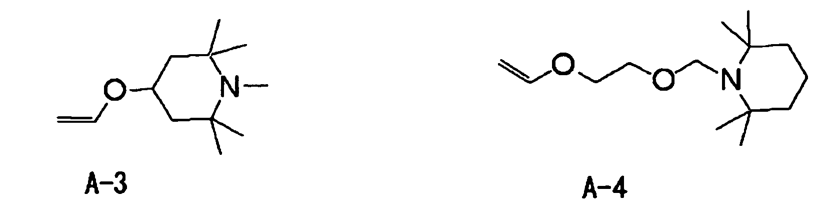

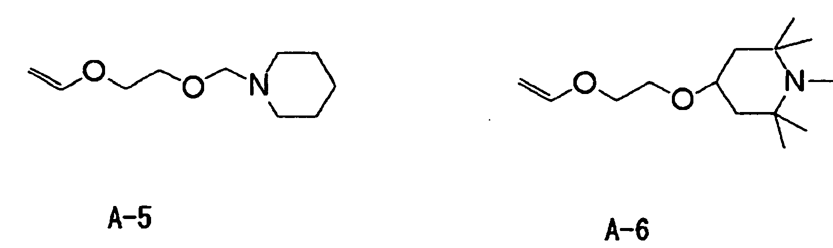

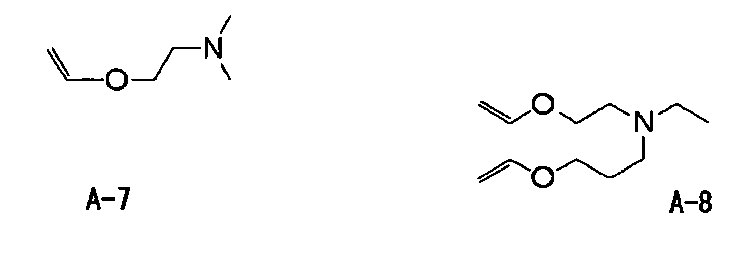

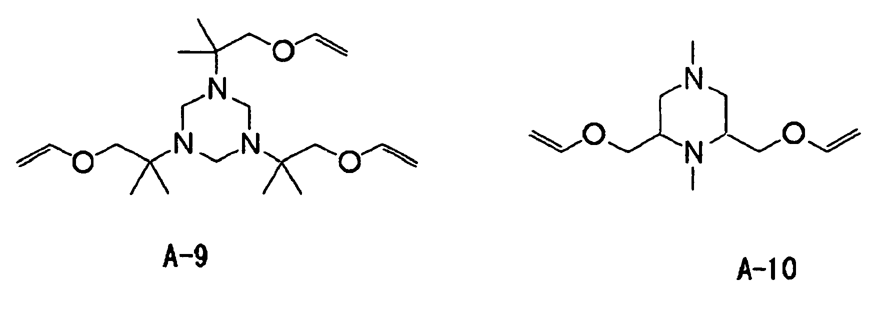

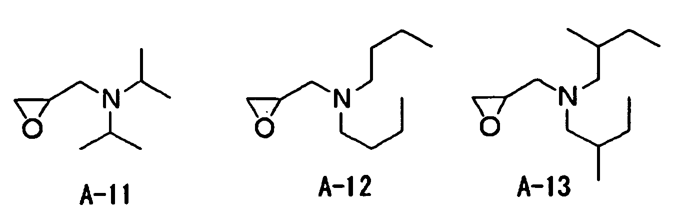

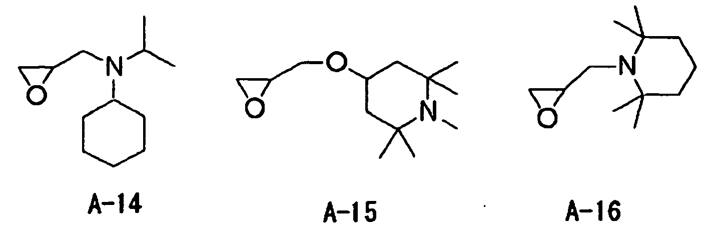

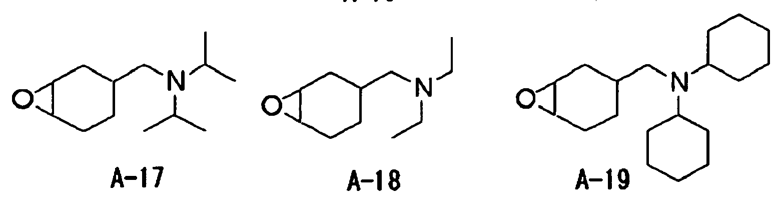

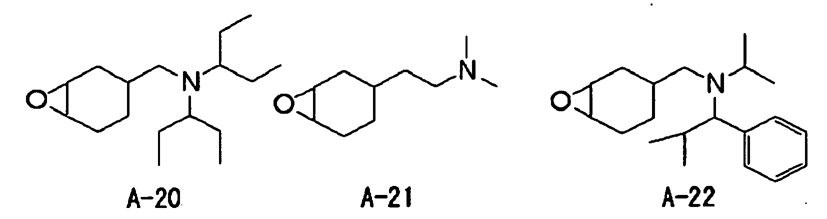

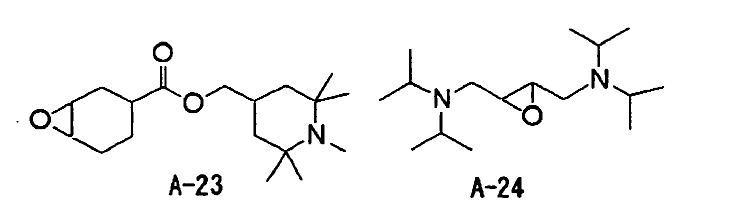

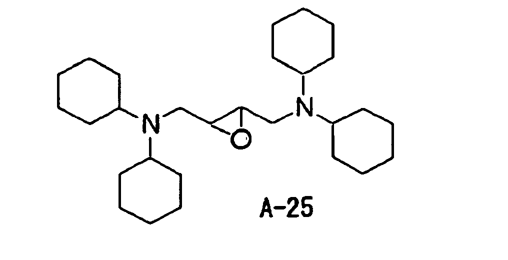

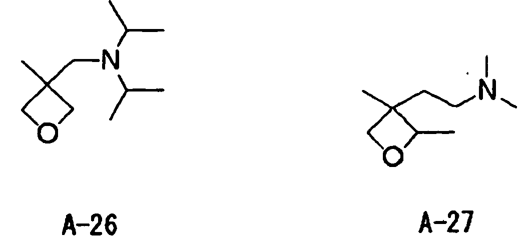

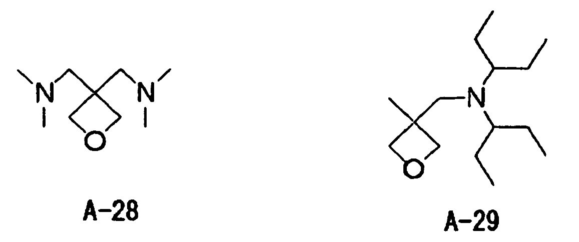

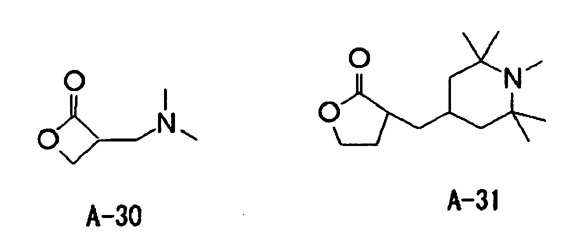

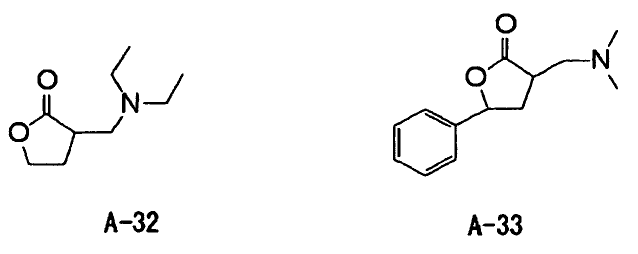

Among these, A-1, A-3, A-4, A-6, A-11, A-24 and A-26 are preferred from the standpoints of performance and synthesis suitability.

In the ink composition of the present invention (a) the polymerizable amine compound may be used alone or in a combination of two or more of them.

The content of (a) the polymerizable amine compound in the ink composition of the present invention is preferably 0.01% by weight to 25% by weight, more preferably 0.1% by weight to 20% by weight, and particularly preferably 1% by weight to 15% by weight, in terms of a solid content in the ink composition from the standpoints of compatibility of curing sensitivity maintenance and storage stability, ejection stability when applied to an inkjet apparatus, and suppression of surface tackiness and yellowing of an image formed.

### [(b) Photo-acid generator]

The ink composition of the present invention contains a compound that is capable of generating polymerization initiation species of the ink composition and generates an acid by irradiation with a radiation ray, that is, a photo-acid generator.

Examples of the photo-acid generator that can be used in the present invention include the compounds such as a photocationically polymerizable photoinitiator, a photoradically polymerizable photoinitiator, a photodecolorant to colorants, a photoalterant, and a compound that generates an acid when irradiated with light such as the light used for microresist (on ultraviolet ray having a wavelength of 200 nm to 400 nm, far ultraviolet ray, particularly preferably, g-ray, h-ray, i-ray, or KrF excimer laser beam), an ArF excimer laser beam, electron beam, X-ray, molecular or ion beam, or the like.

Examples of the photo-acid generators include the compounds which are decomposed to generate an acid when irradiated with a radiation ray, such as onium salt compounds such as diazonium salts, phosphonium salts, sulfonium salts, and iodonium salts, sulfonate compounds such as imidosulfonates, oximesulfonates, diazodisulfones, disulfones, and o-nitrobenzylsulfonates, and the like.

Other examples of the compounds that generate an acid when irradiated with a radiation ray or other activated light used in the present invention include the diazonium salts described in S. I. Schlesinger, Photogr. Sci. Eng., 18, 387 (1974), T. S. Bal et al., Polymer, 21, 423 (1980), and others; the ammonium salts described in U.S. Patent Nos. 4,069,055, 4,069,056, and U.S. Reissue No. 27,992, JP-A No. 3-140,140, and others; the phosphonium salts described in D. C. Necker et al., Macromolecules, 17, 2468 (1984), C. S. Wen et al., Teh, Proc. Conf. Rad. Curing ASIA, p. 478 Tokyo, Oct (1988), U.S. Patent Nos. 4,069,055 and 4,069,056, and others; the iodonium salts described in J. V. Crivello et al., Macromolecules, 10(6), 1307 (1977), Chem. & Eng. News, Nov. 28, p.31 (1988), European Patent (EP) Nos. 104,143, 339,049, and 410,201, JP-ANos. 2-150848 and 2-296514, and others;
the sulfonium salts described in J. V. Crivello et al., Polymer J. 17, 73 (1985), J. V. Crivello et al., J. Org. Chem., 43, 3055 (1978), W. R. Watt et al., J. Polymer Sci., Polymer Chem. Ed., 22, 1789 (1984), J. V. Crivello et al., Polymer Bull., 14, 279 (1985), J. V. Crivello et al, Macromolecules, 14(5), 1141 (1981), J. V. Crivello et al., J. Polymer Sci., Polymer Chem. Ed., 17, 2877 (1979), EP Nos. 370,693, 161,811, 410,201, 339,049, 233,567, 297,443, and 297,442, U.S. Patent Nos. 3,902,114, 4,933,377, 4,760,013, 4,734,444, and 2,833,827, German Patent Nos. 2,904,626, 3,604,580, and 3,604,581, JP-A Nos. 7-28237 and 8-27102, and others;
the selenonium salts described in J. V. Crivello et al., Macromolecules, 10(6), 1307 (1977), J. V. Crivello et al., J. Polymer Sci., Polymer Chem. Ed., 17, 1047 (1979), and others;
the onium salts such as arsonium salts described in C. S. Wen et al., Teh, Proc. Conf. Rad. Curing ASIA, p. 478 Tokyo, Oct (1988), and others; the organic halogen compounds described in U.S. Patent No. 3,905,815, Japanese Patent Application Publication (JP-B) No. 46-4605, JP-ANos. 48-36281, 55-32070, 60-239736, 61-169835, 61-169837, 62-58241, 62-212401, 63-70243, and 63-298339, and others; the organic metals/organic halides described in K. Meier et al., J. Rad. Curing, 13(4), 26 (1986), T. P. Gill et al., Inorg. Chem., 19, 3007 (1980), D. Astruc, Acc. Chem. Res., 19 (12), 377 (1896), JP-A No. 2-161445, and others;
the photo-acid generators containing an O-nitrobenzyl protecting group described in S. Hayase et al., J. Polymer Sci., 25, 753 (1987), E. Reichmanis et al., J. Polymer Sci., Polymer Chem. Ed., 23, 1 (1985), Q. Q. Zhu et al., J. Photochem., 36, 85, 39, 317 (1987), B. Amit et al., Tetrahedron Lett., (24) 2205 (1973), D. H. R. Barton et al., J. Chem. Soc., 3571 (1965), P. M. Collins et al., J. Chem. Soc., Perkin I, 1695 (1975), M. Rudinstein et al., Tetrahedron Lett., (17), 1445 (1975), J. W. Walker et al., J. Am. Chem. Soc., 110, 7170 (1988), S. C. Busman et al., J. Imaging Technol., 11(4), 191 (1985), H. M. Houlihan et al., Macromolecules, 21, 2001 (1988), P. M. Collins et al., J. Chem. Soc., Chem. Commun., 532 (1972), S. Hayase et al., Macromolecules, 18, 1799 (1985), E. Reichmanis et al., J. Electrochem. Soc., Solid State Sci. Technol., 130 (6), F. M. Houlihan et al., Macromolecules, 21, 2001 (1988), EP Nos. 0,290,750, 046,083, 156,535, 271,851, and 0,388,343, U.S. Patent Nos. 3,901,710 and 4,181,531, JP-ANos. 60-198538 and 53-133022, and others; and
the compounds that photodecompose to generate sulfonic acid such as iminosulfonates described in M. Tunooka et al., Polymer Preprints Japan, 35 (8), G. Berner et al., J. Rad. Curing, 13 (4), W. J. Mijs et al., Coating Technol., 55 (697), 45 (1983), Akzo, H. Adachi et al., Polymer Preprints Japan, 37(3), EP Nos. 0199,672, 84515, 044,115, 618,564, and 0101,122, U.S. Patent Nos. 4,371,605 and 4,431,774, JP-A Nos. 64-18143, 2-245756, and 3-140109, and others; the disulfone compounds described in JP-A Nos. 61-166544 and 2-71270, and others; and the diazoketosulfone and diazodisulfone compounds described in JP-ANos. 3-103854, 3-103856, and 4-210960 and others.

In addition, compounds having a group generating acid by the light described above or polymers having such a compound in the main chain or in the side chain, for example, those described in M. E. Woodhouse et al., J. Am. Chem. Soc., 104, 5586 (1982), S. P. Pappas et al., J. Imaging Sci., 30 (5), 218 (1986), S. Kondo et al., Makromol. Chem., Rapid Commun., 9, 625 (1988), Y. Yamada et al., Makromol. Chem., 152, 153, 163 (1972), J. V. Crivello et al., J. Polymer Sci., Polymer Chem. Ed., 17, 3845 (1979), U.S. Patent No. 3,849,137, German Patent No. 3914407, JP-A Nos. 63-26653, 55-164824, 62-69263, 63-146038, 63-163452, 62-153853, and 63-146029, and others, may also be used. Examples thereof include onium salts such as diazonium salts, ammonium salts, phosphonium salts, iodonium salts, sulfonium salts, selenonium salts, and arsonium salts; organic halogen compounds; organic metals/organic halides, o-nitrobenzyl protecting group-containing photo-acid generators; compounds that generates sulfonic acid by photodecomposition such as iminosulfonates, disulfone compounds, diazoketosulfones, and diazodisulfone compounds.

The compounds that generate an acid by light described in V. N. R. Pillai, Synthesis, (1), 1 (1980), A. Abad et al., Tetrahedron Lett., (47) 4555 (1971), D. H. R. Barton et al., J. Chem. Soc., (C), 329 (1970), U.S. Patent No. 3,779,778, EP No. 126,712, and others may also be used.

Favorable examples of the photo-acid generators to be used in the invention include the compounds represented by the following Formulae (b1), (b2), or (b3).

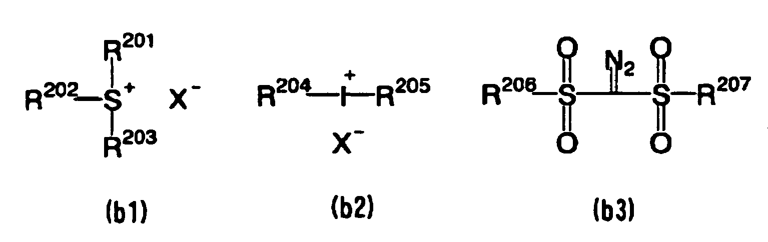

In Formula (b1), R²⁰¹, R²⁰² and R²⁰³ each independently represent an organic group. X⁻ represents a non-nucleophilic anion, and is preferably a sulfonate anion, carboxylate anion, bis(alkylsulfonyl)amide anion, tris(alkylsulfonyl)methide anion, BF₄⁻, PF₆⁻, SbF₆⁻ or a group shown below, preferably an organic anion having one or more carbon atoms.

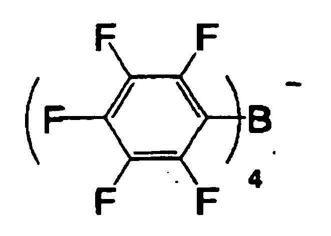

Favorable organic anions include the organic anions shown in the following Formulae.

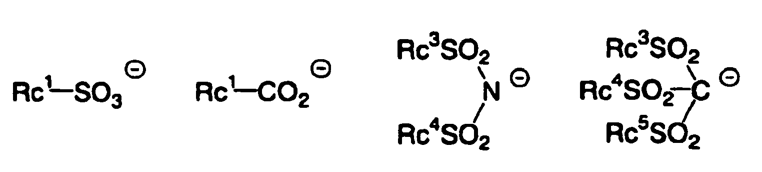

Rc¹ represents an organic group.

The organic group as Rc¹ is a group having 1 to 30 carbon atoms, and preferably an alkyl group, a cycloalkyl group, an aryl group, or a group wherein two or more of these groups are bound to each other via a connecting group such as single bond, -O-, -CO₂-, -S-, -SO₃-, or -SO₂N(Rd¹)-.

Rd¹ represents a hydrogen atom or an alkyl group.

Rc³, Rc⁴, and Rc⁵ each independently represent an organic group.

The organic group as Rc³, Rc⁴, or Rc⁵ is preferably the same as the organic group favorable as Rc¹ and particularly preferably a perfluoroalkyl group having 1 to 4 carbon atoms.

Rc³ and Rc⁴ may bond to each other to form a ring.

The group formed by bonding Rc³ and Rc⁴ is, for example, an alkylene group or an arylene group, preferably a perfluoroalkylene group having 2 to 4 carbon atoms.

The organic group as Rc¹ or Rc³ to Rc⁵ is most preferably an alkyl group in which the hydrogen atom at 1 position is replaced by a fluorine atom or a fluoroalkyl group or a phenyl group substituted by a fluorine atom or a fluoroalkyl group. By containing a fluorine atom or a fluoroalkyl group, acidity of the acid generated by irradiation with light is increased, thus improving sensitivity.

The organic group as R²⁰¹, R²⁰² or R²⁰³ is generally a group having 1 to 30 carbon atoms, preferably 1 to 20 carbon atoms.

Two from among R²⁰¹ to R²⁰³ may bond to each other to form a ring structure, which may contain an oxygen or sulfur atom, an ester or amide bond, or a carbonyl group. The group formed by two from among R²⁰¹ to R²⁰³ being bonded with each other is, for example, an alkylene group (e.g., butylene or pentylene).

Examples of the organic groups R²⁰¹, R²⁰² and R²⁰³ include the groups corresponding to the compounds (b1-1), (b1-2), and (b1-3) described below.

The photo-acid generator may be a compound having multiple groups in the structure represented by Formula (b1). For example, it may be a compound having a structure wherein at least one of R²⁰¹ to R²⁰³ in the compound represented by Formula (b1) is bonded directly, or via a connecting group, to at least one of R²⁰¹ to R²⁰³ in the other compound represented by Formula (b1).

Still more preferable components (b1) include the compounds (b1-1), (b1-2), and (b1-3) described below.

The compound (b1-1) is an arylsulfonium compound wherein at least one of R²⁰¹ to R²⁰³ in Formula (b1) above is an aryl group, i.e., a compound having an arylsulfonium ion as its cation.

All of R²⁰¹ to R²⁰³ in the arylsulfonium compound may be an aryl group; or alternatively, one or two of R²⁰¹ to R²⁰³ may be an aryl group while the rest is an alkyl or cycloalkyl group.

Examples of the arylsulfonium compounds include triarylsulfonium compounds, diarylalkylsulfonium compounds, aryldialkylsulfonium compounds, diarylcycloalkylsulfonium compounds, aryldicycloalkylsulfonium compounds, and the like.

The aryl group in the arylsulfonium compounds is preferably an aryl group such as a phenyl or naphthyl group, or a heteroaryl group such as an indole or pyrrole residue, and more preferably a phenyl group or an indole residue. When the arylsulfonium compound has two or more aryl groups, the two or more aryl groups may be the same as or different from each other.

The alkyl group that the arylsulfonium compound may have as needed is preferably a linear or branched alkyl group having 1 to 15 carbon atoms, and examples thereof include methyl, ethyl, propyl, n-butyl, sec-butyl, and t-butyl groups and the like.

The cycloalkyl group that the arylsulfonium compound may have as needed is preferably a cycloalkyl group having 3 to 15 carbon atoms, and examples thereof include cyclopropyl, cyclobutyl, and cyclohexyl groups, and the like.

The aryl, alkyl, or cycloalkyl group as R²⁰¹ to R²⁰³ may have an alkyl group (e.g., those having 1 to 15 carbon atoms), a cycloalkyl group (e.g., those having 3 to 15 carbon atoms), an aryl group (e.g., those having 6 to 14 carbon atoms), an alkoxy group (e.g., those having 1 to 15 carbon atoms), a halogen atom, a hydroxy group, or a phenylthio group, as a substituent. Preferable examples of the substituent include linear or branched alkyl groups having 1 to 12 carbon atoms, cycloalkyl groups having 3 to 12 carbon atoms, and linear, branched or cyclic alkoxy groups having 1 to 12 carbon atoms; and most preferable are alkyl groups having 1 to 4 carbon atoms and alkoxy groups having 1 to 4 carbon atoms. All or any one of the three of R²⁰¹ to R²⁰³ may have a substituent. In addition, when any one of R²⁰¹ to R²⁰³ is an aryl group, the substituent is preferably substituted at the p-position in the aryl group.

Hereinafter, the compound (b1-2) will be described.

The compound (b1-2) is a compound, wherein R²⁰¹ to R²⁰³ in Formula (b1) each independently represent an organic group that does not contain an aromatic ring. The aromatic rings cited here include the aromatic rings containing a heteroatom.

The organic group, that does not contain an aromatic ring, as R²⁰¹ to R²⁰³ generally has 1 to 30 carbon atoms and preferably 1 to 20 carbon atoms.

R²⁰¹ to R²⁰³ each independently, preferably, represent an alkyl, cycloalkyl, allyl, or vinyl group, more preferably a linear, branched, or cyclic 2-oxoalkyl group or an alkoxycarbonylmethyl group, and particularly preferably a linear or branched 2-oxoalkyl group.

The alkyl group as R²⁰¹ to R²⁰³ may be a straight-chain or branched group, preferably a linear or branched alkyl group having 1 to 10 carbon atoms (e.g., a methyl, ethyl, propyl, butyl, or pentyl group), and more preferably a linear or branched 2-oxoalkyl group or an alkoxycarbonylmethyl group.

The cycloalkyl group as R²⁰¹ to R²⁰³ is preferably a cycloalkyl group having 3 to 10 carbon atoms (e.g., a cyclopentyl, cyclohexyl, or norbornyl group); and a cyclic 2-oxoalkyl group is more preferable.

Favorable examples of the linear, branched, and cyclic 2-oxoalkyl groups of R²⁰¹ to R²⁰³ include the alkyl and cycloalkyl groups described above having >C=O at the 2 position.

The alkoxy group in the alkoxycarbonylmethyl group of R²⁰¹ to R²⁰³ is preferably an alkoxy group having 1 to 5 carbon atoms (e.g., a methoxy, ethoxy, propoxy, butoxy, or pentoxy group).

R²⁰¹ to R²⁰³ may be further substituted by a halogen atom, an alkoxy group (e.g., an alkoxy group having 1 to 5 carbon atoms), a hydroxy group, a cyano group, or a nitro group.

The compound (b1-3) is a compound represented by the following Formula (b1-3), i.e., a compound having a phenacyl sulfonium salt structure.

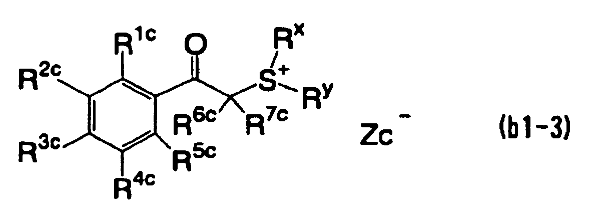

In Formula (b1-3), R^{1c} to R^{5c} each independently represent a hydrogen or halogen atom, or an alkyl, cycloalkyl, or alkoxy group.

R^{6c} and R^{7c} each independently represent a hydrogen atom or an alkyl or cycloalkyl group.

R^{x} and R^{y} each independently represent an alkyl, cycloalkyl, allyl, or vinyl group.

Any two or more of R^{1c} to R^{5c}, R^{6c} and R^{7c}, or R^{x} and R^{y} may bond to each other to form a ring structure.

Zc⁻ represents a non-nucleophilic anion, and is similar to the non-nucleophilic anion X⁻ in Formula (b1).

The alkyl group as R^{1c} to R^{7c} may be a straight-chain or branched group, and examples thereof include linear or branched alkyl groups having 1 to 20 carbon atoms, preferably having 1 to 12 carbon atoms, (e.g., a methyl, ethyl, linear or branched propyl, linear or branched butyl, and linear or branched pentyl group).

The cycloalkyl group as R^{1c} to R^{7c} is preferably a cycloalkyl group having 3 to 8 carbon atoms (e.g., a cyclopentyl or cyclohexyl group).

The alkoxy group as R^{1c} to R^{5c} may be a linear, branched or cyclic group, and examples thereof include alkoxy groups having 1 to 10 carbon atoms, preferably linear or branched alkoxy groups having 1 to 5 carbon atoms (e.g., a methoxy, ethoxy, linear or branched propoxy, linear or branched butoxy, and linear or branched pentoxy group), and cyclic alkoxy groups having 3 to 8 carbon atoms (e.g., a cyclopentyloxy and cyclohexyloxy group).

Examples of the groups formed by bonding any two or more of R^{1c} to R^{5c}, R^{6c} and R^{7c}, or R^{x} and R^{y} include butylene and pentylene groups. The ring structure may contain an oxygen or sulfur atom or an ester or amide bond.

Preferably, any of the R^{1c} to R^{5c} is a linear or branched alkyl group, a cycloalkyl group, or a linear, branched, or cyclic alkoxy group; and more preferably, the total number of carbon atoms in R^{1c} to R^{5c} is 2 to 15. As a result, solubility in a solvent is improved, thus generation of particles during storage is suppressed, which is preferable.

The alkyl and cycloalkyl groups of R^{x} and R^{y} include those similar to the alkyl and cycloalkyl groups as R^{1c} to R^{7c}.

Each of R^{x} and R^{y} is preferably a 2-oxoalkyl or alkoxycarbonylmethyl group.

The 2-oxoalkyl group is, for example, the same as those for the alkyl or cycloalkyl group having a >C=O group at the 2 position of R^{1c} to R^{5c}

Examples of the alkoxy group in the alkoxycarbonylmethyl group are similar to those for the alkoxy group of R^{1c} to R^{5c}.

Each of R^{x} and R^{y} is preferably an alkyl or cycloalkyl group having 4 or more carbon atoms, more preferably an alkyl or cycloalkyl group having 6 or more carbon atoms, and still more preferably 8 or more carbon atoms.

In Formula (b2) and (b3), R²⁰⁴ to R²⁰⁷ each independently represent an aryl, alkyl or cycloalkyl group. X⁻ represents a non-nucleophilic anion, and is similar to the non-nucleophilic anion X- in Formula (b1).

The aryl group as R²⁰⁴ to R²⁰⁷ is preferably a phenyl or naphthyl group and more preferably a phenyl group.

The alkyl group as R²⁰⁴ to R²⁰⁷ may be a straight-chain or branched group, and is preferably a linear or branched alkyl group having 1 to 10 carbon atoms (e.g., a methyl, ethyl, propyl, butyl, or pentyl group). The cycloalkyl group as R²⁰⁴ to R²⁰⁷ is preferably a cycloalkyl group having 3 to 10 carbon atoms (e.g., a cyclopentyl, cyclohexyl, or norbornyl group).

Examples of the substituent that R²⁰⁴ to R²⁰⁷ may have include alkyl groups (e.g., those having 1 to 15 carbon atoms), cycloalkyl groups (e.g., those having 3 to 15 carbon atoms), aryl groups (e.g., those having 6 to 15 carbon atoms), alkoxy groups (e.g., those having 1 to 15 carbon atoms), a halogen atom, a hydroxy group, a phenylthio group, and the like.

Other usable examples of the compounds that generate an acid when irradiated with an activated light or a radiation ray include the compounds represented by the following Formulae (b4), (b5), or (b6).

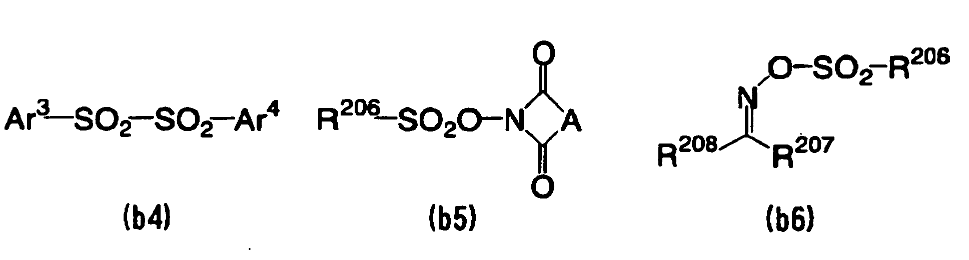

In Formulae (b4) to (b6), Ar³ and Ar⁴ each independently represent an aryl group.

R²⁰⁶, R²⁰⁷ and R²⁰⁸ each independently represent an alkyl, cycloalkyl or aryl group.

A represents an alkylene, alkenylene or arylene group.

Among the photo-acid generators mentioned above, preferable are the compounds represented by Formulae (b1) to (b3).

Favorable examples of (b) the photo-acid generator to be used in the invention include compounds (b-1) to (b-96), as listed below, but the invention is not limited thereto.

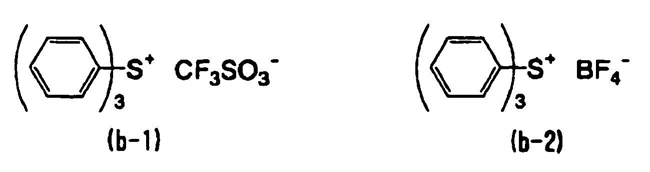

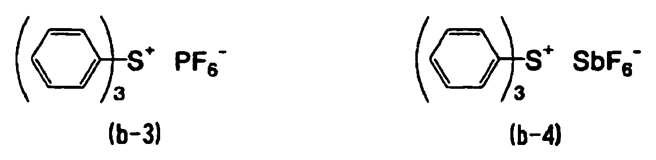

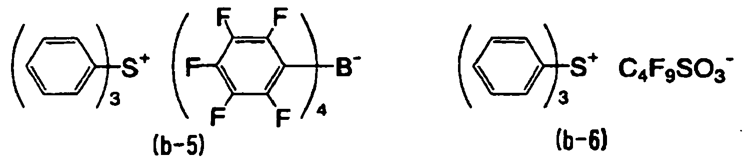

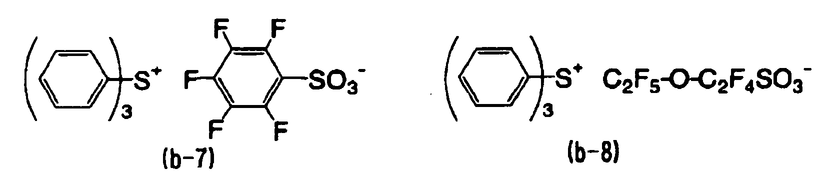

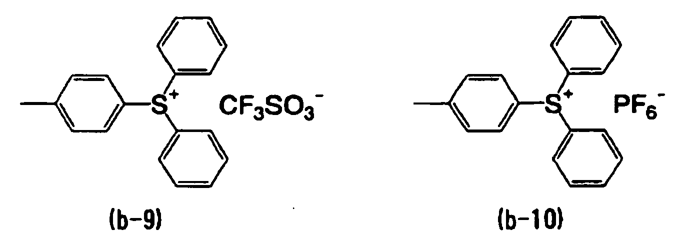

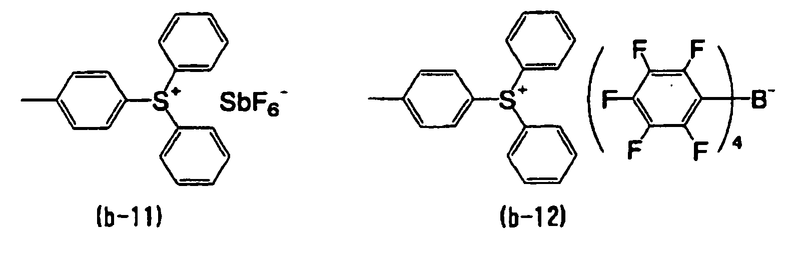

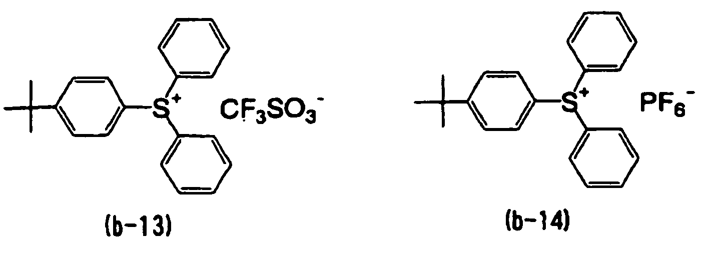

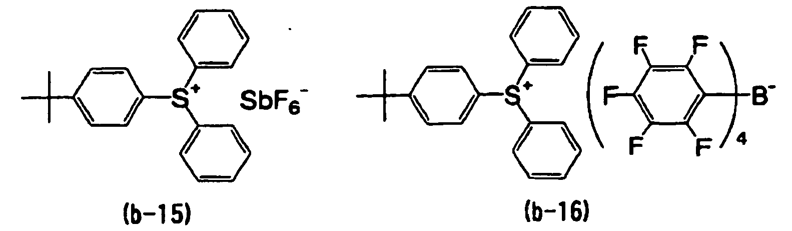

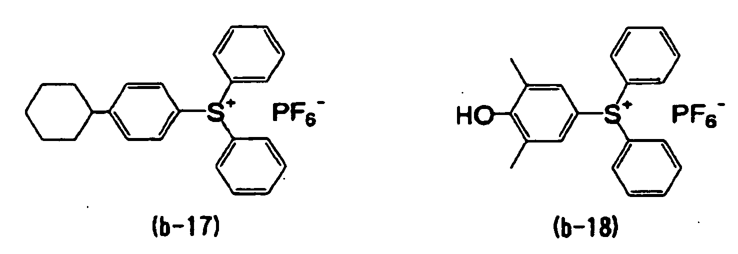

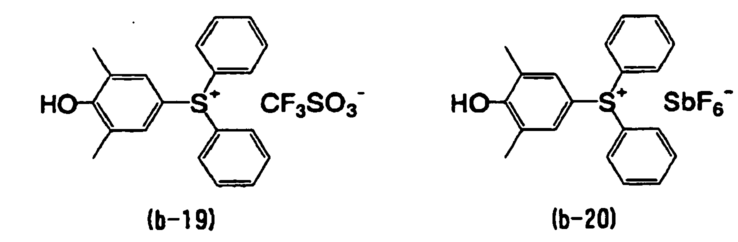

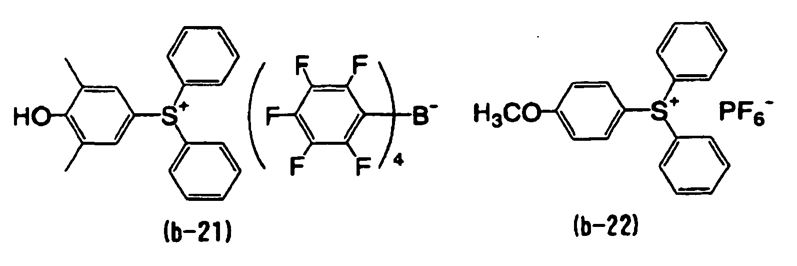

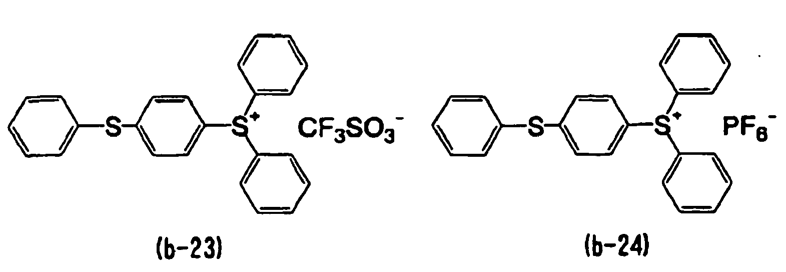

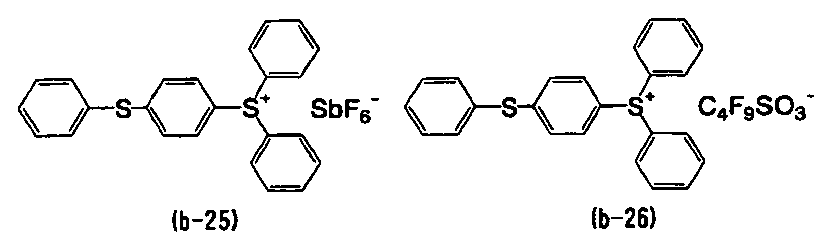

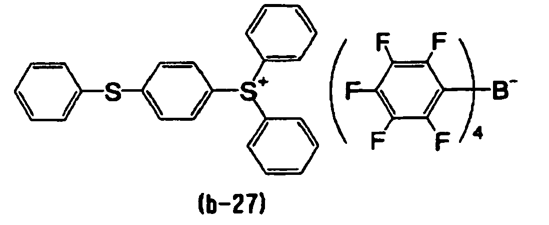

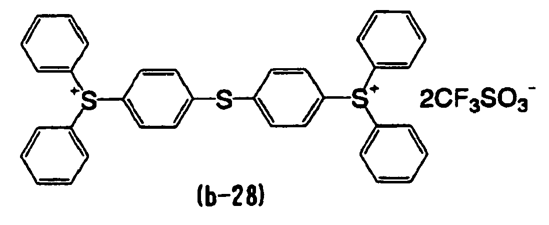

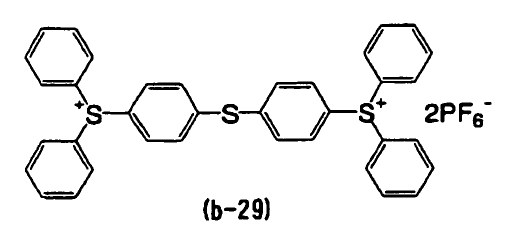

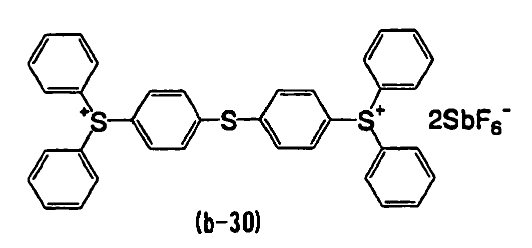

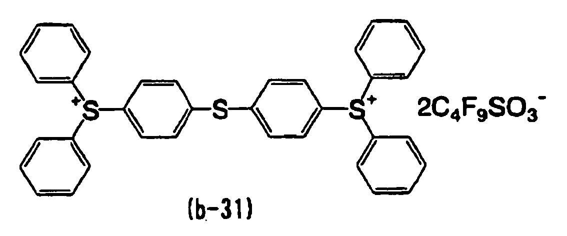

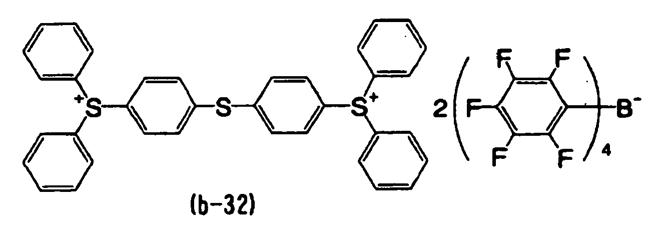

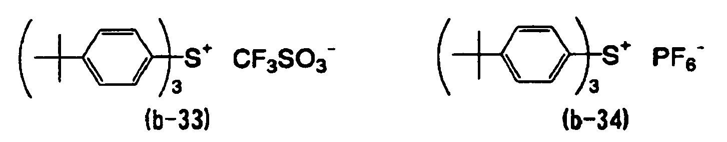

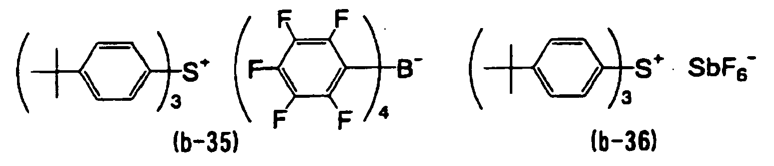

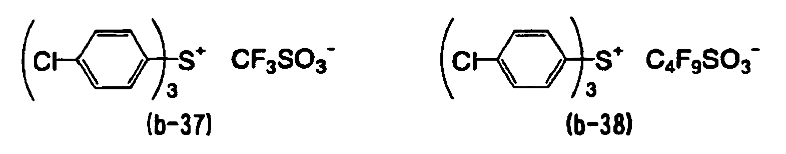

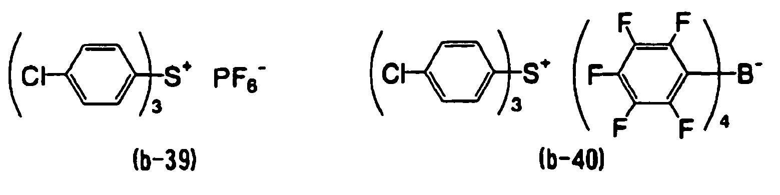

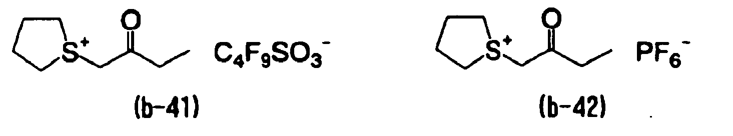

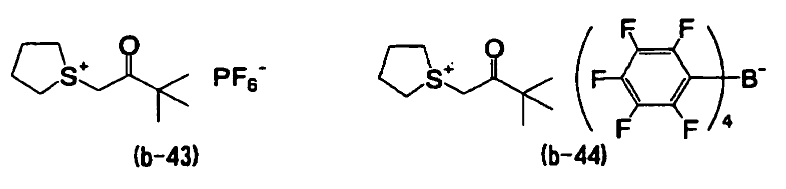

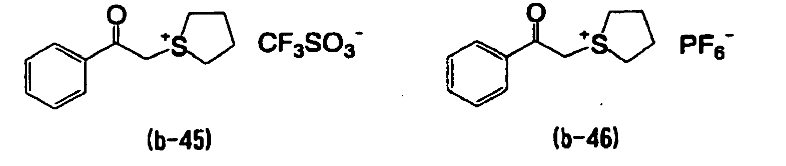

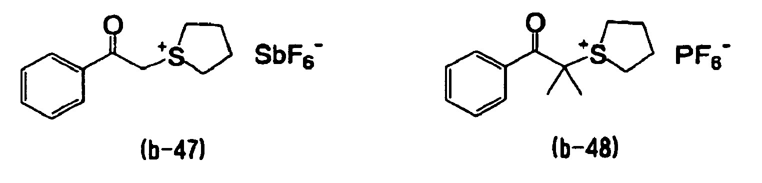

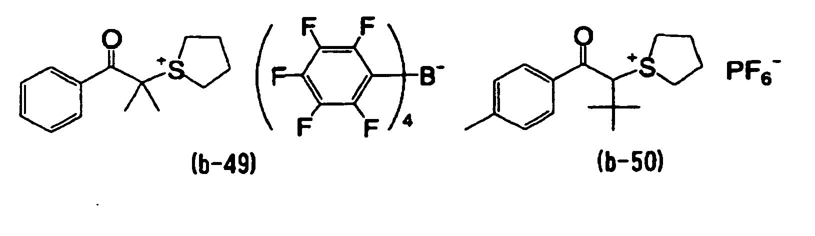

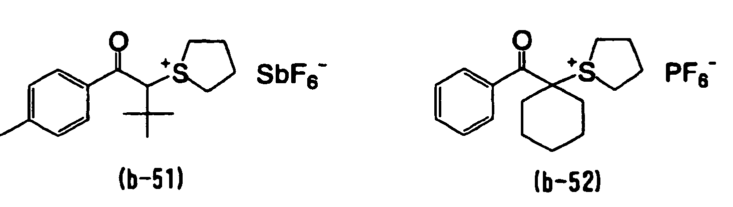

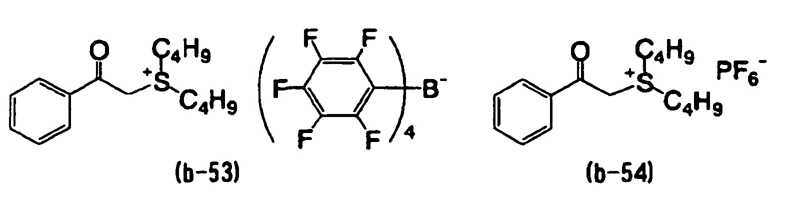

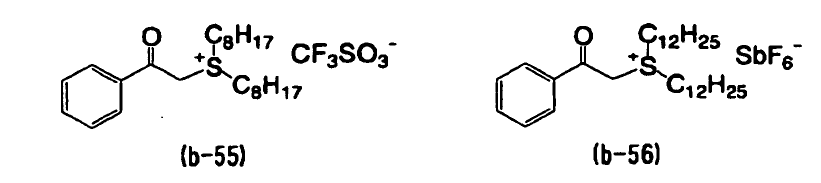

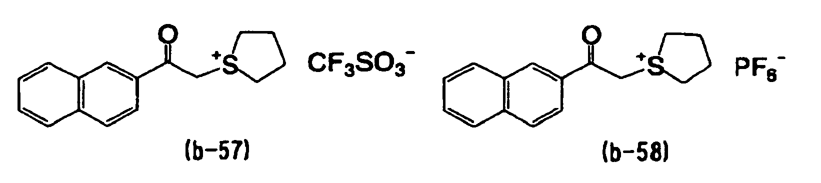

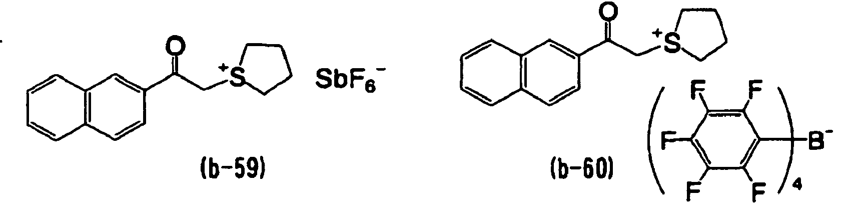

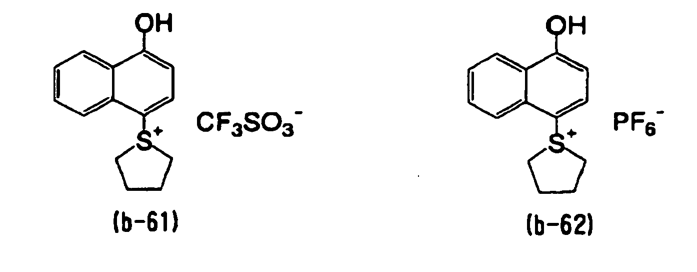

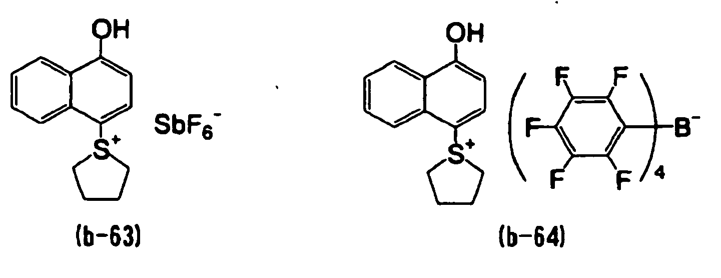

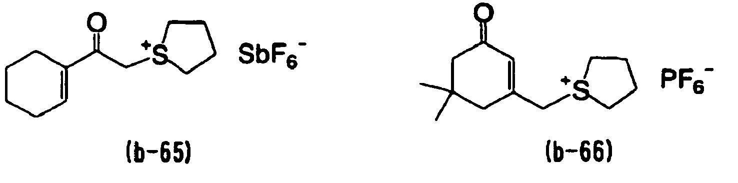

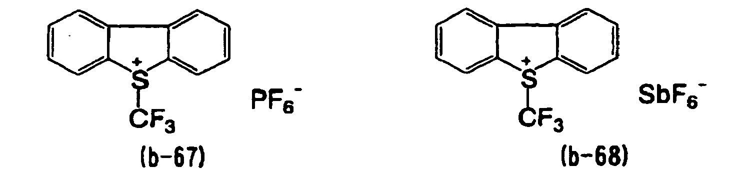

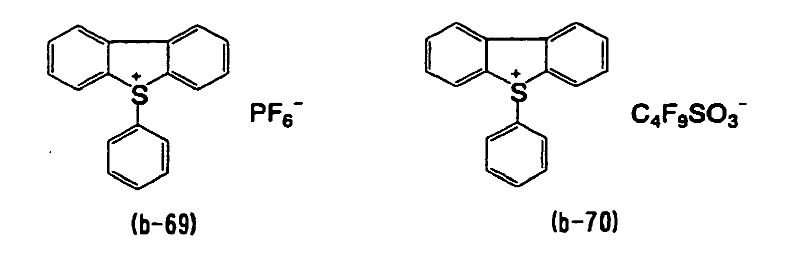

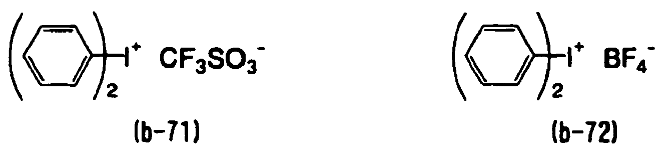

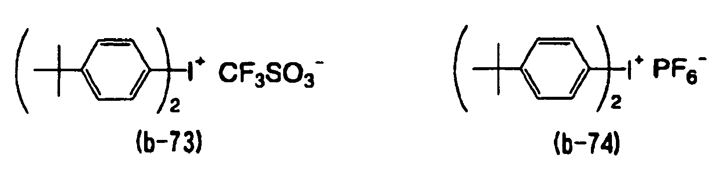

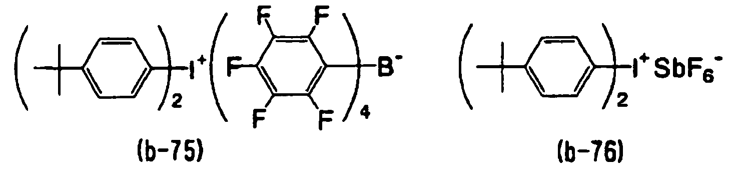

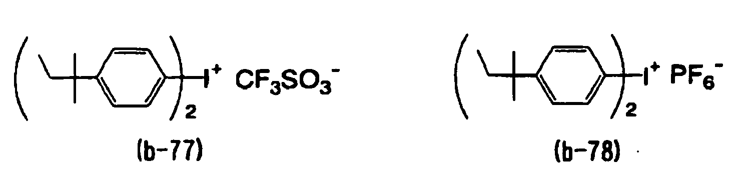

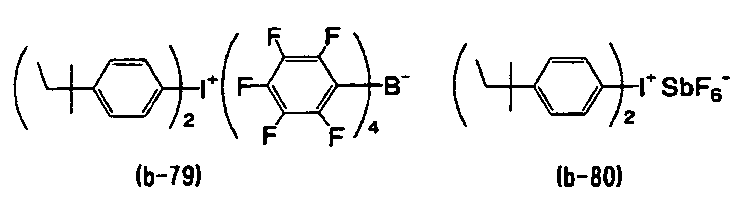

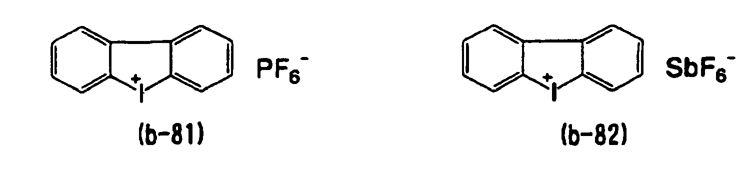

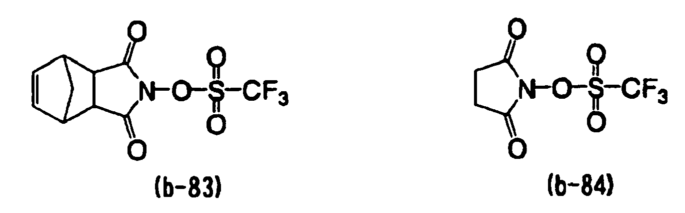

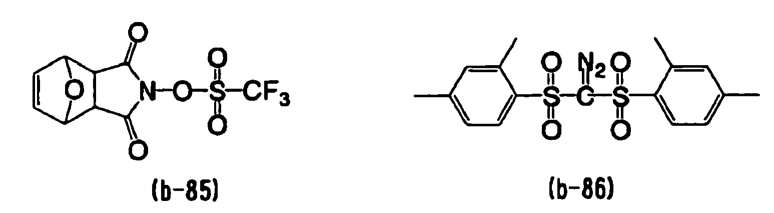

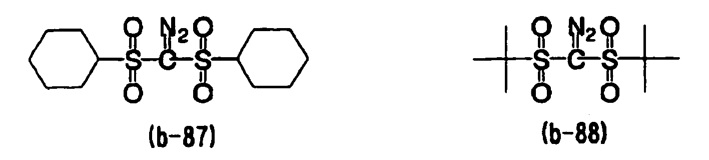

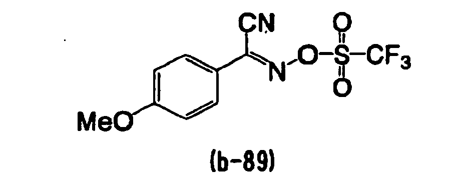

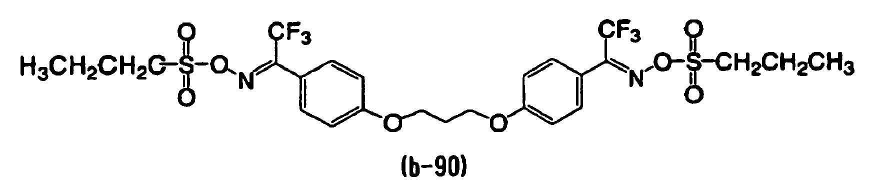

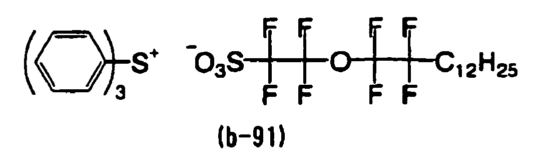

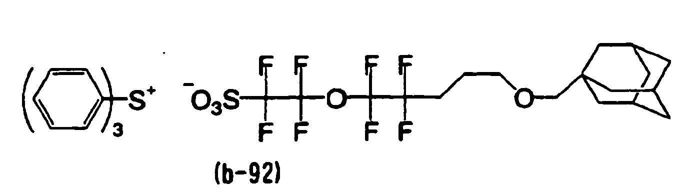

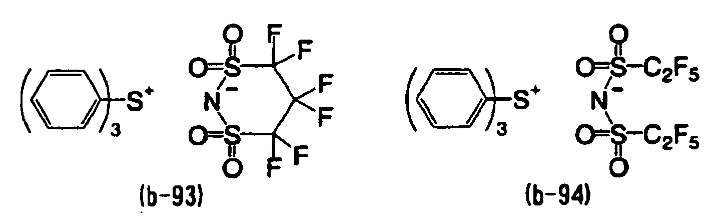

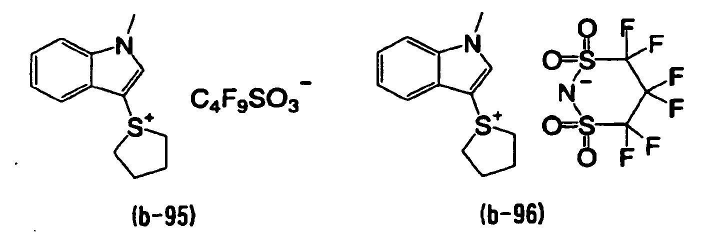

Furthermore, other than the above compounds, oxazole derivatives, s-triazine derivatives and the like described in JP-A No. 2002-122994, paragraphs 0029 to 0030 are preferably used as the photo-acid generator to be used as a cationic polymerization initiator in the present invention.

Onium salt compounds and sulfonate compounds exemplified in JP-A No. 2002-122994, paragraphs 0037 to 0063 can also preferably be used as the photo-acid generator.

In the ink composition of the present invention, (b) the photo-acid generator may be used alone or in a combination of two or more of them.

The content of (b) the photo-acid generator in the ink composition is preferably 0.1 % by weight to 20% by weight, more preferably 0.5% by weight to 10% by weight, and still more preferably 1% by weight to 7% by weight, in terms of the total solid content of the ink composition.

The solid content in the ink composition in the present invention is a component that is obtained by removing volatile components such as a solvent described hereinafter from the ink composition.

### [(c) Cationically polymerizable compound]

The cationically polymerizable compound (c) used in the embodiment according to claim 5 of the invention, wherein a tertiary amine compound is used that has a hindered amine structrue as a tertiary amine structures and that has a cationically polymerizable group comprising a vinyl ether group, an epoxy group or an oxetane group, is not particularly limited, as long as it is curable in the polymerization reaction initiated by the acid generated from a cation polymerization initiator (b) (that is a photo-acid generator) described above, and any one of various cationically polymerizable monomers known as photocationically polymerizable monomers may be used. In the embodiment according to claim 1, two or more cationically polymerizable compounds selected from an oxetane compound, an epoxy compound and a vinyl ether compound are used. Examples of the cationically polymerizable monomers include epoxy, vinyl ether, and oxetane compounds described in JP-A Nos. 6-9714, 2001-31892, 2001-40068, 2001-55507, 2001-310938, 2001-310937, and 2001-220526.

The epoxy compound is, for example, an aromatic epoxide, an alicyclic epoxide or the like. Examples of the aromatic epoxide include a di- or poly-glycidyl ether prepared by reacting a polyphenol having at least one aromatic nucleus or an alkylene oxide adduct thereof with an epichlorohydrin, such as di- or poly-glycidyl ethers of bisphenol A or an alkylene oxide adduct thereof, di- or poly-glycidyl ethers of hydrogenated bisphenol A or an alkylene oxide adduct thereof, and novolak type epoxy resins. Examples of the alkylene oxides here include ethylene oxide and propylene oxide.

Preferable examples of the alicyclic epoxide include a cylcohexene oxide- or cyclopentene oxide-containing compound, which is prepared by epoxidizing a compound having at least one cycloalkane ring such as cyclohexene or cyclopentene ring with a suitable oxidizing agent such as hydrogen peroxide or peracid.

The aliphatic epoxide is, for example, a di- or poly-glycidyl ether of an aliphatic polyalcohol or an alkylene oxide adduct thereof, and examples thereof include alkylene glycol diglycidyl ethers such as ethylene glycol diglycidyl ether, propylene glycol diglycidyl ether, and 1,6-hexanediol diglycidyl ether; polyalcohol polyglycidyl ethers such as di- or tri-glycidyl ether of glycerin or an alkylene oxide adduct thereof; polyalkylene glycol diglycidyl ethers such as diglycidyl ethers of polyethylene glycol or an alkylene oxide adduct thereof and diglycidyl ethers of polypropylene glycol or an alkylene oxide adduct thereof; and the like. The alkylene oxides are, for example, ethylene oxide, propylene oxide, and the like.

Examples of the monofunctional epoxy compounds used in the invention include phenyl glycidyl ether, p-tert-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cylcohexene oxide, 3-methacryloyloxymethylcylcohexene oxide, 3-acryloyloxymethylcylcohexene oxide, 3-vinylcyclohexene oxide and the like.

Examples of the multifunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolak resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexanecarboxylate, methylene-bis(3,4-epoxycyclohexane), dicyclopentadiene diepoxide, ethylene glycol di(3,4-epoxycyclohexylmethyl) ether, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerin triglycidyl ether, trimethylolpropane triglycidyl ether, polyethylene glycol diglycidyl ether, polypropylene glycol diglycidyl ethers, 1,1,3-tetradecadiene dioxide, limonene dioxide, 1,2,7,8-diepoxyoctane, 1,2,5,6-diepoxycyclooctane, and the like.

Among these epoxy compounds, aromatic and alicyclic epoxides are preferable and alicyclic epoxides are particularly preferable, from the viewpoint of curing speed.

Examples of the vinyl ether compounds include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; mono-vinyl ether compounds such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenylether-o-propylene carbonate, dodecyl vinyl ether, diethylene glycol monovinyl ether, and octadecyl vinyl ether, and the like.

Specific examples of the monofunctional vinyl ethers include methyl vinyl ether, ethyl vinyl ether, propyl vinyl ether, n-butyl vinyl ether, t-butyl vinyl ether, 2-ethylhexyl vinyl ether, n-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, phenoxypolyethylene glycol vinyl ether and the like.

Examples of the multifunctional vinyl ethers include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ethers, and bisphenol F alkylene oxide divinyl ethers; multifunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, ethylene oxide adducts of trimethylolpropane trivinyl ether, propylene oxide adducts of trimethylolpropane trivinyl ether, ethylene oxide adducts of ditrimethylolpropane tetravinyl ether, propylene oxide adducts of ditrimethylolpropane tetravinyl ether, ethylene oxide adducts of pentaerythritol tetravinyl ether, propylene oxide adducts of pentaerythritol tetravinyl ether, ethylene oxide adducts of dipentaerythritol hexavinyl ether, and propylene oxide adducts of dipentaerythritol hexavinyl ether; and the like.

The vinyl ether compound is preferably a di- or tri-vinyl ether compound and particularly preferably a divinyl ether compound, from the viewpoints of curability, adhesion to the recording medium, and surface hardness of the formed image.

The oxetane compound according to the invention is a compound having an oxetane ring compound, and any one of known oxetane compounds, for example those described in JP-A Nos. 2001-220526, 2001-310937, and 2003-341217 may be used.

The compound having an oxetane ring used in the ink composition of the present invention is preferably a compound having one to four oxetane rings in its structure. By using such a compound, it becomes easy to maintain the viscosity of the ink composition within a range at which handling efficiency is good, and further, a high adhesion between the cured ink and the recording medium can be obtained.

Examples of the compounds having one or two oxetane rings in the molecule include the compounds represented by the following Formulae (1) to (3), and the like.

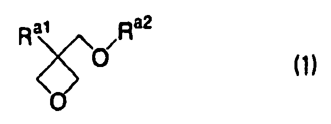

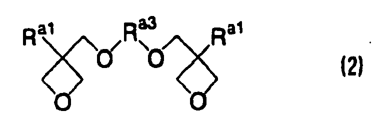

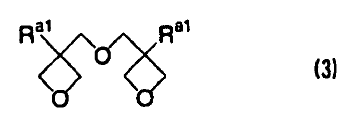

In Formulae (1) to (3), R^{a1} represents a hydrogen atom, an alkyl group having 1 to 6 carbon atoms, a fluoroalkyl group having 1 to 6 carbon atoms, an allyl group, an aryl group, a furyl group or a thienyl group. When there are two R^{a1} s in the molecule, they may be the same or different from each other.

Examples of the alkyl group include methyl group, ethyl group, propyl group and butyl group, or the like;, and examples of the fluoroalkyl group include the groups in which any one of hydrogen atoms of the above alkyl groups is substituted by a fluorine atom.

R^{a2} represents a hydrogen atom, an alkyl group having 1 to 6 carbon atoms, an alkenyl group having 2 to 6 carbon atoms, a group having an aromatic ring, an alkylcarbonyl group having 2 to 6 carbon atoms, an alkoxycarbonyl group having 2 to 6 carbon atoms, or an N-alkylcarbamoyl group having 2 to 6 carbon atoms. Examples of the alkyl group include methyl, ethyl, propyl, and butyl groups and the like; examples of the alkenyl group include 1-propenyl, 2-propenyl, 2-methyl-1-propenyl, 2-methyl-2-propenyl, 1-butenyl, 2-butenyl, and 3-butenyl groups and the like; and examples of the group having an aromatic ring include phenyl, benzyl, fluorobenzyl, methoxybenzyl, and phenoxyethyl groups and the like. Examples of the alkylcarbonyl group include ethylcarbonyl, propylcarbonyl, and butylcarbonyl groups and the like; examples of the alkoxycarbonyl group include ethoxycarbonyl, propoxycarbonyl, and butoxycarbonyl groups and the like; and examples of the N-alkylcarbamoyl group include ethylcarbamoyl, propylcarbamoyl, butylcarbamoyl, and pentylcarbamoyl groups and the like.

R^{a3} represents a linear or branched alkylene group, a linear or branched poly(alkyleneoxy) group, a linear or branched unsaturated hydrocarbon group, a carbonyl group or a carbonyl group-containing alkylene group, a carboxy group-containing alkylene group, a carbamoyl group-containing alkylene group, or the groups shown below. Examples of the alkylene group include ethylene, propylene, and butylene groups; examples of the poly(alkyleneoxy) group include poly(ethyleneoxy) and poly(propyleneoxy) groups and the like. Examples of the unsaturated hydrocarbon group include propenylene, methylpropenylene, and butenylene groups and the like.

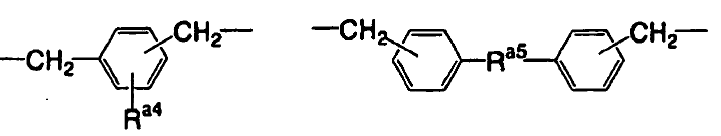

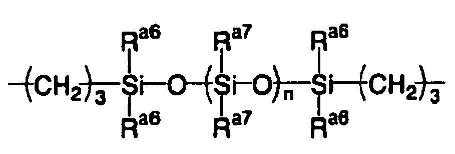

When R^{a3} is one of the polyvalent groups above, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkylcarboxyl group, a carboxyl group, or a carbamoyl group.

R^{a5} represents an oxygen or sulfur atom, a methylene group, NH, SO, SO₂, C(CF₃)₂, or C(CH₃)₂.

R^{a6} represents an alkyl group having 1 to 4 carbon atoms or an aryl group; and n is an integer of 0 to 2,000. R^{a7} represents an alkyl group having 1 to 4 carbon atoms, an aryl group, or a monovalent group having the structure shown below. In the following Formula, R^{a8} is an alkyl group having 1 to 4 carbon atoms or an aryl group; and m is an integer of 0 to 100.

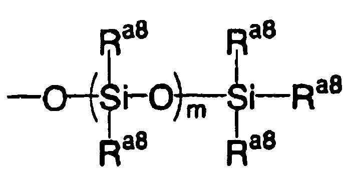

Examples of the compounds having three or four oxetane rings include the compounds represented by the following Formula (4).

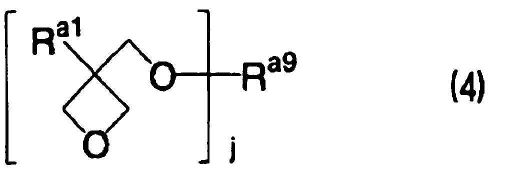

In Formula (4), R^{a1} has the same meaning as in Formula (1) above. Examples of R^{a9}, a polyvalent connecting group, include a branched alkylene group having 1 to 12 carbon atoms such as the group represented by the following Formula A, B, or C, a branched poly(alkyleneoxy) group such as the group represented by the following Formula D, a branched polysiloxy group represented by the following Formula E, and the like. j is 3 or 4.

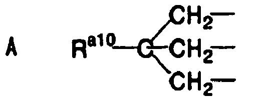

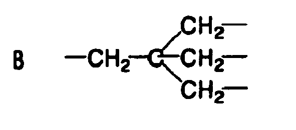

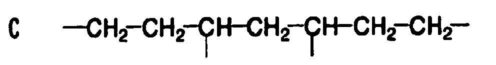

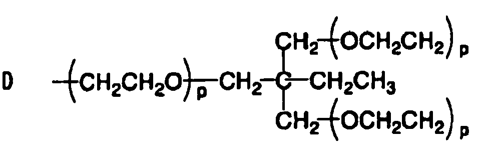

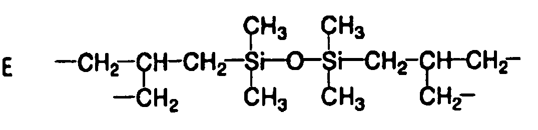

In Formula A, R^{a10} represents a methyl, ethyl or propyl group, and in Formula D, p is an integer of 1 to 10.

In another embodiment, the oxetane compounds favorably used in the present invention include the compounds having oxetane rings (an oxetane ring) in the side chains (side chain) represented by the following Formula (5).

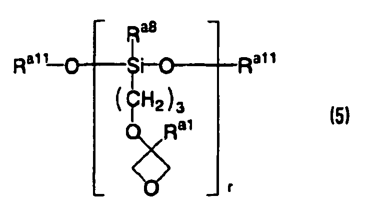

In Formula (5), R^{a1} and R^{a8} each has the same meaning as in the Formula above. R^{a11} represents an alkyl group having 1 to 4 carbon atoms, such as methyl, ethyl, propyl or butyl, or a trialkylsilyl group; and r is 1 to 4.

Such compounds having oxetane rings (an oxetane ring) are described specifically in JP-A No. 2003-341217, paragraph [0021] to [0084], and the compounds described therein can be used favorably in the invention.

Among the oxetane compounds used in the present invention, a compound having one oxetane ring is preferable, from the viewpoints of viscosity and tackiness of the ink composition.

The ink composition according to claim 5 of the invention may contain only one, or two or more of these cationically polymerizable compounds, but it is preferable to use at least one compound selected from the oxetane and epoxy compounds and a vinyl ether compound in combination, from the viewpoint of effectively preventing shrinkage during curing of ink. In the embodiment according to claim 1, two or more cationically polymerizable compounds selected from an oxetane compound, an epoxy compound and a vinyl ether compound are used.

The content of the cationically polymerizable compound (c) in the ink composition is appropriately in a range of 10% by weight to 95% by weight, preferably 30% by weight to 90 by weight, and still more preferably 50% by weight to 85% by weight, in proportion to the total solid content of the composition.

In the ink composition of the present invention, various additives can be used according to the purpose, in addition to the above essential components. Those optional components are described.

### [(d) Colorant]

By adding a colorant in the ink composition of the present invention, a visible image can be formed. For example, although addition of colorant is not necessarily needed for forming an image region on a planographic printing plate, it is also preferableto use a colorant from the viewpoint of efficiency for plate-checking of the obtained planographic printing plate. The colorant that can be used is not particularly limited, and any known colorants of various types (pigments or dyes) may be selected and used as appropriate according to usage. For example, the use of a pigment is preferable for forming an image superior in weather resistance. As a dye, any of water-soluble and oil-soluble dyes may be used, but the oil soluble dye is preferable.

The pigments favorably used in the invention will be described below.

### (Pigment)

The pigment is not particularly limited, and examples thereof include all common commercially-available organic and inorganic pigments, dispersions of the pigments dispersed in a dispersion medium such as an insoluble resin, pigments with a surface on which a resin is grafted, and the like. Alternatively, for example, resin particles colored with a dye may also be used.

Such pigments include the pigments described, for example, in Seijiro Itoh Ed., "Dictionary of Pigments" (2000), W. Herbst K. Hunger, "Industrial Organic Pigments", and JP-A Nos. 2002-12607, 2002-188025, 2003-26978, and 2003-342503.

Typical examples of the organic and inorganic pigments to be used in the invention include the followings:
Yellow pigments, e.g., monoazo pigments such as C.I. Pigment Yellow 1 (Fast Yellow G, etc.) and C.I. Pigment Yellow 74; disazo pigments such as C.I. Pigment Yellow 12 (Disazo Yellow AAA, etc.) and C.I. Pigment Yellow 17; non-benzidine azo pigments such as C.I. Pigment Yellow 180; azolake pigments such as C.I. Pigment Yellow 100 (tartrazine yellow lake, etc.); condensation azo pigments such as C.I. Pigment Yellow 95 (Condensation Azo Yellow GR, etc.); acidic-dye lake pigments such as C.I. Pigment Yellow 115 (quinoline yellow lake, etc.); basic-dye lake pigments such as C.I. Pigment Yellow 18 (thioflavin lake, etc.); anthraquinone pigments such as fravantrone yellow (Y-24); isoindolinone pigments such as Isoindolinone Yellow 3RLT (Y-110); quinophthalone pigments such as quinophthalone yellow (Y-138); isoindoline pigments such as isoindoline yellow (Y-139); nitroso pigments such as C.I. Pigment Yellow 153 (nickel nitroso yellow, etc.); metal complex salt azomethine pigments such as C.I. Pigment Yellow 117 (copper azomethine yellow, etc.); and the like.
Red or magenta pigments, e.g., monoazo pigments such as C.I. Pigment Red 3 (toluidine red, etc.); disazo pigments such as C.I. Pigment Red 38 (pyrazolone red B, etc.); azolake pigments such as C.I. Pigment Red 53:1 (lake red C, etc.) and C.I. Pigment Red 57:1 (Brilliant Carmine 6B); condensation azo pigments such as C.I. Pigment Red 144 (Condensation Azo Red BR, etc.); acidic-dye lake pigments such as C.I. Pigment Red 174 (Phloxine B lake, etc.); basic-dye lake pigments such as C.I. Pigment Red 81 (Rhodamine 6G' Lake, etc.); anthraquinone pigments such as C.I. Pigment Red 177 (dianthraquinonyl red, etc.); thioindigo pigments such as C.I. Pigment Red 88 (Thioindigo Bordeaux, etc.); perynone pigments such as C.I. Pigment Red 194 (perynone red, etc.); perylene pigments such as C.I. Pigment Red 149 (perylene scarlet, etc.); quinacridone pigments such as C.I. Pigment Violet 19 (unsubstituted quinacridone) and C.I. Pigment Red 122 (quinacridone magenta, etc.); isoindolinone pigments such as C.I. Pigment Red 180 (Isoindolinone Red 2BLT, etc.); alizarin lake pigments such as C.I. Pigment Red 83 (madder lake, etc.); and the like.
Blue or cyan pigments, e.g., disazo pigments such as C.I. Pigment Blue 25 (dianisidine blue, etc.); phthalocyanine pigments such as C.I. Pigment Blue 15 (phthalocyanine blue, etc.); acidic-dye lake pigments such as C.I. Pigment Blue 24 (peacock blue lake, etc.); basic-dye lake pigments such as C.I. Pigment Blue 1 (Victoria Pure Blue BO lake, etc.); anthraquinone pigments such as C.I. Pigment Blue 60 (indanthron blue, etc.); alkali blue pigments such as C.I. Pigment Blue 18 (Alkali Blue V-5: 1); and the like.
Green pigments, e.g., phthalocyanine pigments such as C.I. Pigment Green 7 (phthalocyanine green) and C.I. Pigment Green 36 (phthalocyanine green); azo metal complex pigments such as C.I. Pigment Green 8 (nitroso green); and the like.
Orange pigments, e.g., isoindoline pigments such as C.I. Pigment Orange 66 (isoindoline orange); anthraquinone pigments such as C.I. Pigment Orange 51 (dichloropyranthron orange); and the like.
Black pigments, e.g., carbon black, titanium black, aniline black, and the like.
White pigments, e.g., basic lead carbonate (2PbCO₃Pb(OH)₂, so-called silver white), zinc oxide (ZnO, so-called zinc white), titanium oxide (TiO₂, so-called titanium white), strontium titanate (SrTiO₃, so-called titanium strontium white), and the like.

Titanium oxide has a lower density and a higher refractive index, and further superior chemical and physical stability as compared with other white pigments, thus having a greater masking and coloring properties as a pigment, and is excellent in resistance to acid or alkali and other environmental factors. Thus, use of titanium oxide as the white pigment is preferable. Other white pigments (including white pigments other than those described above) may also be used as needed.

For dispersing the pigment, dispersing machines may be used, such as a ball mill, sand mill, attritor, roll mill, jet mill, homogenizer, paint shaker, kneader, agitator, Henschel mixer, colloid mill, ultrasonic wave homogenizer, pearl mill, and a wet jet mill.

A dispersant may also be added at the time of dispersing a pigment. Examples of the dispersants include hydroxy group-containing carboxylic acid esters, salts of a long-chain polyaminoamide with a high-molecular weight acid ester, high-molecular weight polycarboxylic acid salts, high-molecular weight unsaturated acid esters, copolymers, modified polyacrylates, aliphatic polyvalent carboxylic acids, naphthalenesulfonic acid/formalin condensates, polyoxyethylene alkyl phosphoric acid esters, pigment derivatives, and the like. The use of a commercially available polymer dispersant, such as a Solsperse series product of Zeneca, is also preferable.

It is also possible to use a synergist suitable for the pigment used as the dispersion aid. These dispersants and dispersion aids are preferably added in an amount of 1 part by weight to 50 parts by weight with respect to 100 parts by weight of the pigment.

As a dispersion medium for the components such as a pigment in the ink composition, a solvent may be added, or the cationically polymerizable compound (a), being a low-molecular weight component, may be used without solvent. However, since the ink composition of the present invention is radiation-curable and is cured after application on a recording medium, the ink preferably contains no solvent. This is because the solvent remaining in the hardened ink image may cause deterioration in solvent resistance or problems of VOC (Volatile Organic Compound) of the residual solvent. In view of this, the dispersion medium is preferably a cationically polymerizable compound (a), and selecting a cationic-polymerization monomer with the lowest viscosity is particularly preferable from the viewpoint of improving dispersibility and handling efficiency of the ink composition.

The average diameter of the pigment is preferably in a range of 0.02 µm to 0.4 µm, more preferably 0.02 µm to 0.1 µm, and still more preferably 0.02 µm to 0.07 µm.

The pigment, dispersant, and dispersion medium are selected and conditions of dispersion and filtration are determined such that the average diameter of the pigment particles is within the above preferable range. Control of particle diameter enables prevention of clogging in head nozzles and retaining of storage stability, transparency and curing sensitivity of the ink.

(d) the colorant is preferably added in the ink composition in an amount of 15% by weight to 20% by weight, more preferably 2% by weight to 10% by weight, in terms of a solid content.

### (Dye)

The dye used in the present invention is preferably oil-soluble. Specifically, the dye preferably has solubility in water (represented by the weight of the colorant dissolved in 100 g of water) of 1 g or less at 25°C, preferably 0.5 g or less, and more preferably 0.1 g or less. Accordingly, so-called water-insoluble and oil-soluble dyes are favorably used.

The oil-soluble dye preferably has a melting point of 200°C or lower, more preferably 150°C or lower, and still more preferably 100°C or lower. Use of a low-melting point oil-soluble dye enables restriction of crystal precipitation of the colorant in the ink composition and improvement in storage stability of the ink composition.

The dye preferably has a high oxidation potential, in terms of improving resistance to deterioration of color, in particular to oxidative substances such as ozone and improving handling properties. Thus, the oil-soluble dye used in the present invention preferably has an oxidation potential of 1.0 V or more (vs. SCE). Higher oxidation potential is preferable, thus a dye having an oxidation potential of 1.1 V or more (vs. SCE) is more preferable, and that of 1.15 V or more (vs. SCE) is particularly preferable.

As the yellow dyes, compounds having a structure of Formula (Y-I) described in JP-A No. 2004-250483 are preferable.

Particularly preferable yellow dyes are the dyes represented by Formulae (Y-II) to (Y-IV) in JP-A No. 2004-250483, paragraph [0034], and specific examples thereof include the compounds described in JP-A No. 2004-250483, paragraph [0060] to [0071]. The oil-soluble dyes represented by Formula (Y-I) described therein may be used not only in yellow ink, but also in inks of any other colors such as black and red inks.

As the magenta dyes, compounds having the structures represented by Formulae (3) or (4) in JP-A No. 2002-114930 are preferable, and typical examples thereof include the compounds described in JP-A No. 2002-114930, paragraph [0054] to [0073].

Particularly preferable magenta dyes are the azo dyes represented by Formulae (M-1) or (M-2) in JP-A No. 2002-121414, paragraph [0084] to [0122], and typical examples thereof include the compounds described in JP-ANo. 2002-121414, paragraph [0123] to [0132]. The oil-soluble dyes represented by Formulae (3), (4), (M-1) or (M-2) may be used not only in magenta ink, but also in inks of any other colors such as black and red inks.

As the cyan dyes, the dyes represented by Formulae (I) to (IV) in JP-A No. 2001-181547 and the dyes represented by Formulae (IV-1) to (IV-4) in JP-ANo. 2002-121414, paragraph [0063] to [0078] are preferable, and specific examples thereof include the compounds described in JP-A 2001-181547, paragraph [0052] to [0066] and in JP-A 2002-121414, paragraph [0079] to [0081].

Particularly preferable cyan dyes are the phthalocyanine dyes represented by Formulae (C-I) or (C-II) described in JP-A No. 2002-121414, paragraph [0133] to [0196], and still more preferable are the phthalocyanine dyes represented by Formula (C-II). Specific examples thereof include the compounds described in JP-A No. 2002-121414, paragraph [0198] to [0201]. The oil-soluble dyes represented by Formulae (I) to (IV), (IV-1) to (IV-4), (C-I), or (C-II) may be used not only in cyan ink, but also in inks of any other colors such as black and green inks.

As for the dyes to be used in the present invention, it is also preferable to introduce an oil-solubilizing group in the skeleton of the dyes described above, to ensure that the necessary amount of dye is dissolved in the ink composition.

Examples of the oil-solubilizing groups include long-chain or branched alkyl groups, long-chain or branched alkoxy groups, long-chain or branched alkylthio groups, long-chain or branched alkylsulfonyl groups, long-chain or branched acyloxy groups, long-chain or branched alkoxycarbonyl groups, long-chain or branched acyl groups, long-chain or branched acylamino groups, long-chain or branched alkylsulfonylamino groups, long-chain or branched alkylaminosulfonyl groups, as well as aryl, aryloxy, aryloxycarbonyl, arylcarbonyloxy, arylaminocarbonyl, arylaminosulfonyl, and arylsulfonylamino groups containing these long-chain or branched substituents, and the like.

Alternatively, conversion of an oil-solubilizing group, such as alkoxycarbony, aryloxycarbonyl, alkylaminosulfonyl or arylaminosulfonyl, on water-soluble dyes having carboxylic acid or sulfonic acid groups may be performed, by using a long-chain or branched alcohol, amine, phenol, or aniline derivative.

### -Oxidation potential-

The oxidation potential value (Eox) of the dye in the invention can be easily determined by those skilled in the art. These methods are described, for example, in P. Delahay, "New Instrumental Method in Electrochemistry" (1954, Interscience Publishers), A. J. Bard et al., "Electrochemical Methods" (1980, John Wiley & Sons), and Akira Fujishima et al., "Electrochemical Measurement Methods" (1984, Gihodo Shuppan).

Specifically, the oxidation potential value is measured by dissolving a test sample at a concentration of 1×10⁻² mole/liter to 1×10⁻⁶ mole/liter in a solvent such as dimethylformamide or acetonitrile containing a supporting electrolyte such as sodium perchlorate or tetrapropylammonium perchlorate. An oxidation wave is obtained by applying a voltage to the anodic side (higher side), using carbon (GC) as the working electrode and a revolving platinum electrode as the counter electrode in a cyclic voltametric or direct-current polarographic apparatus, then the oxidation wave is approximated by a straight line. Intersecting points of the straight line of oxidation wave and a straight line of residual current-potential, and the straight line of oxidation wave and a straight line of saturated current (or a straight line that is parallel to the vertical line that passes through the peak of electric potential) are calculated. The medium voltage at the center of the line connecting the two intersecting points is measured as the value against SCE (saturated calomel electrode). The value may deviate to a certain extent, approximately by several dozen millivolts, under the influence of the difference in voltage between the liquids or the liquid resistance of the sample solution, but it is possible to assure the reproducibility of the electric potential by using a standard sample (e.g., hydroquinone). The supporting electrolyte and the solvent for use may be selected as appropriate according to the oxidation potential and solubility of the test sample. The supporting electrolyte and the solvent for use are described in Akira Fujishima et al., "Electrochemical Measurement Methods" (1984, Gihodo Shuppan) pages. 101 to 118.

The content of the colorant in the ink composition in the case of using a dye as the colorant (d) is preferably 1% by weight to 20% by weight, and more preferably 2% by weight to 10% by weight, in terms of a solid content, similar to the case of the pigment.

### [Other components]

In addition to the components (a) to (c) as the essential components, and (d) the colorant added according to need, the ink composition of the present invention can contain various known additives used in an ink composition according to the purpose so far as the advantage of the present invention is not impaired.

Various additives used according to need are described below.

### [Organic acidic compound showing pKa value of 2 to 6]

In the invention, if necessary, an organic acidic compound having a pKa of 2 to 6 is further used. The organic acidic compound that shows the pKa value of 2 to 6 (hereinafter, simply referred to as "organic acidic component") corresponds to a weak acidic organic compound, from the qualitative point of view. When the pKa is in the above range, the ink composition of the invention is excellent in sensitivity and stability over time.

Specific examples of the organic acidic compound include, in particular, carboxylic acids such as aliphatic or aromatic monocarboxylic acids, dicarboxylic acids and tricarboxylic acids having 1 to 20 carbon atoms such as acetic acid, phenylacetic acid, phenoxyacetic acid, methoxypropionic acid, lactic acid, hexanoic acid, heptanoic acid, octanoic acid, palmitic acid, stearic acid, oleic acid, linolenic acid, cyclopropylcarboxylic acid, cyclobutanecarboxylic acid, cyclopentanecarboxylic acid, cyclohexanecarboxylic acid, 1-adamantanecarboxylic acid, 1,3-adamantanedicarboxylic acid, norbornen-2,3-dicarboxylic acid, abietic acid, trans-retinoic acid, cyclohexylacetic acid, dicyclohexylacetic acid, adamantaneacetic acid, malonic acid, malonic acid monomethyl ester, fumaric acid, maleic acid, maleic acid monomethyl ester, itaconic acid, crotonic acid, succinic acid, adipic acid, sebacic acid, glycolic acid, diglycolic acid, mandelic acid, tartaric acid, malic acid, arginic acid, cinnamic acid, methoxycinnamic acid, 3,5-dimethoxycinnamic acid, benzoic acid, salicylic acid, 4-hydroxybenzoic acid, gallic acid, 3-nitrobenzoic acid, 3-chlorobenzoic acid, 4-vinylbenzoic acid, t-butylbenzoic acid, 1-naphthoic acid, 1-hydroxy-2-naphthoic acid, fluorenone-2-carboxylic acid, 9-anthracenecarboxylic acid, 2-anthraquinonecarboxylic acid, phthalic acid, phthalic acid monomethyl ester, isophthalic acid, terephthalic acid, trimellitic acid, and trimellitic acid monomethyl ester. However, the invention is not restricted thereto.

When the organic acidic component is used in the ink composition of the invention, a content thereof with respect to a total solid content of the ink composition is preferably in a range of 0.001 % by weight to 10% by weight, more preferably in a range of 0.0 1 % by weight to 7% by weight, and still more preferably in a range of 0.05% by weight to 5% by weight. Furthermore, when a particular base component is used, the ratio of the particular base component to the organic acidic component is preferably in a range of 0.1 to 4 and more preferably in a range of 0.3 to 2 by molar ratio of (particular base component)/(organic acidic component).

### (Ultraviolet absorbent)

An ultraviolet absorbent may be added to the ink composition of the invention, for improvement in weather fastness and prevention of discoloration of the obtained image.

Examples of the ultraviolet absorbents include the benzotriazole compounds described in JP-ANos. 58-185677, 61-190537, 2-782, 5-197075 and 9-34057 and others; the benzophenone compounds described in JP-A Nos. 46-2784 and 5-194483, U.S. Patent No. 3,214,463, and others; the cinnamic acid compounds described in JP-B Nos. 48-30492 and 56-21141, JP-A No. 10-88106, and others; the triazine compounds described in JP-A Nos. 4-298503, 8-53427, 8-239368, and 10-182621, Japanese Patent Application National Publication (JP-W) 8-501291, and others; the compounds described in Research Disclosure No. 24239; compounds that emit light by absorbing an ultraviolet ray such as stilbene and benzoxazole compounds; so-called fluorescent brighteners; and the like.

The addition amount may be suitably determined according to the purpose, but is generally about 0.5% by weight to about 15% by weight on the basis of the solid content in the ink composition.

### (Sensitizer)

A sensitizer may be added to the ink composition of the invention, for improvement in acid-generating efficiency of photo-acid generator and for a longer wavelength to sensitize. The sensitizer is not particularly limited, as long as it sensitizes the photo-acid generator in the electron- or energy-transfer mechanism. Favorable examples thereof include aromatic polyfused-ring compounds such as anthracene, 9,10-dialkoxyanthracene, pyrene and perylene; aromatic ketone compounds such as acetophenone, benzophenone, thioxanthone and Michler's ketone; and heterocyclic compounds such as phenothiazine and N-aryloxasolidinones. The addition amount can be decided as appropriate according to the purpose, but is generally 0.01 mol% to 1 mol%, preferably 0.1 mol% to 0.5 mol%, relative to the photo-acid generator.

### (Antioxidant)

An antioxidant may be added, for improvement of stability of the ink composition. Examples of the antioxidants include those described in EP Patent Laid-Open Nos. 223739, 309401, 309402, 310551, 310552 and 459416, German Patent Laid-Open No. 3435443, JP-A Nos. 54-48535, 62-262047, 63-113536, 63-163351, 2-262654, 2-71262, 3-121449, 5-61166, and 5-119449, U.S. Patent Nos. 4,814,262 and 4,980,275, and others. The addition amount can be determined as appropriate according to usage, but generally 0.1 to 8 wt % on the basis of the solid content in the ink composition.

### (Fade-inhibitor)

Any one of various organic and metal complex-based fade-inhibitors may be used in the ink composition of the invention. Examples of the organic fade-inhibitor include hydroquinones, alkoxyphenols, dialkoxyphenols, phenols, anilines, amines, indanes, chromanes, alkoxyanilines, heterocycles, and the like.. Examples of the metal complex-based fade-inhibitors include nickel complexes, zinc complexes, and the like; Specific examples thereof include the compounds described in the patents cited in Research Disclosure No. 17643 (sections VII-I to J), ibid., No. 15162, ibid., No. 18716 (left column on p.650), ibid., No. 36544 (p. 527), ibid., No. 307105 (p. 872), and ibid., No. 15162; and the compounds included in the Formula of typical compounds and the exemplary compounds described in JP-A No. 62-215272, pages 127 to 137.

The addition amount can be determined as appropriate according to the purpose, but is generally about 0.1 % by weight to about 8% by weight on the basis of the solid content in the ink composition.

### (Electrically conductive salt)

An electrically conductive salt such as potassium thiocyanate, lithium nitrate, ammonium thiocyanate, or dimethylamine hydrochloride may be added to the ink composition of the invention, for control of the physical properties of ejection.

### (Solvent)

Addition of a very slight amount of organic solvent to the ink composition of the invention is effective for improvement in adhesion to the recording medium.

Examples of the solvents include ketone solvents such as acetone, methyl ethyl ketone, and diethyl ketone; alcohol solvents such as methanol, ethanol, 2-propanol, 1-propanol, 1-butanol, and tert-butanol; chlorine-based solvents such as chloroform and methylene chloride; aromatic solvents such as benzene and toluene; ester solvents such as ethyl acetate, butyl acetate, and isopropyl acetate; ether solvents such as diethyl ether, tetrahydrofuran, and dioxane; glycol ether solvents such as ethylene glycol monomethyl ether and ethylene glycol dimethyl ether; and the like.

When a solvent is used, the amount of the solvent added is in a range that does not cause problems in solvent resistance and VOC, and thus, preferably in a range of 0.1% by weight to 5% by weight, more preferably 0.1 % by weight to 3% by weight, with respect to the entire ink composition.

### (Polymer compound)

Various polymer compounds may be added to the ink composition, for adjustment of film physical properties. Examples of the polymer compounds include acrylic polymers, polyvinylbutyral resins, polyurethane resins, polyamide resins, polyester resins, epoxy resins, phenol resins, polycarbonate resins, polyvinyl butyral resins, polyvinyl formal resins, shellac, vinyl resins, acrylic resins, rubber resin, waxes, other natural resins, and the like. These polymer compounds may be used in a combination of two or more of them. Among them, vinyl copolymers obtained by copolymerization with an acrylic monomer are preferable. In addition, copolymers containing a "carboxy group-containing monomer", "alkyl methacrylate", or "alkyl acrylate" as the structural unit in a copolymerization component are also used favorably for the polymer binding material.

### (Surfactant)

As the surfactants, those described in JP-A Nos. 62-173463 and 62-183457 are described. Examples thereof include anionic surfactants such as dialkylsulfoscuccinic acid salts, alkylnaphthalenesulfonic acid salts, and fatty acid salts; nonionic surfactants such as polyoxyethylene alkyl ethers, polyoxyethylene alkylallyl ethers, acetylene glycols, and polyoxyethylene-polyoxypropylene block copolymers; cationic surfactants such as alkylamine salts and quaternary ammonium salts; and the like. An organic fluorine compound may be used instead of the surfactant. The organic fluorine compound is preferably hydrophobic. Examples of the organic fluorine compounds include fluorine-type surfactants, oily fluorine-type compounds (e.g., fluorine oil) and solid fluorine-type compound resins (e.g., polytetrafluoroethylene resin); and typical examples thereof include those described in JP-B No. 57-9053 (Columns 8 to 17) and JP-A No. 62-135826.

Other additives may also be added as needed, such as a leveling additive, a matting agent, a wax for adjustment of film physical properties, or a tackifier for improvement in adhesion to a recording medium of polyolefin, PET or the like, that does not inhibit polymerization.

Specific examples of tackifiers include high-molecular weight adhesive polymers described in JP-A 2001-49200, pages 5 to 6 (e.g., copolymers of an ester of (meth)acrylic acid and an alcohol with an alkyl group having 1 to 20 carbon atoms, an ester of (meth)acrylic acid and an alicyclic alcohol having 3 to 14 carbon atoms, and an ester of (meth)acrylic acid and an aromatic alcohol having 6 to 14 carbon atoms), and low-molecular weight adhesive imparting resins containing a polymerizable unsaturated bond, and the like.

Considering the ejection efficiency, the ink composition according to the invention preferably has an ink viscosity of 7 mPa·s to 30 mPa·s, more preferably 7 mPa·s to 20 mPa·s, at a temperature at which the ink is ejected, and thus, it is preferable to adjust and determine the composition ratio appropriately so that the viscosity falls within a range. The viscosity of the ink composition at 25°C to 30°C is preferably 35 mPa·s to 500 mPa·s, and more preferably 35 mPa·s to 200 mPa·s. By increasing the viscosity at room temperature, permeation of ink into a recording medium can be prevented, even when a porous recording medium is used, thus the amount of uncured monomer and odor can be reduced. Further, ink bleeding at the time of ink droplets being ejected onto the recording medium can be suppressed, thereby improving the image quality. When the ink viscosity at 25°C to 30°C is within the above range, sufficient effects of preventing ink bleeding can be achieved, and delivery of an ink liquid is favorable.

The surface tension of the ink composition of the invention is preferably 20 mN/m to 30 mN/m and more preferably 23 mN/m to 28 mN/m. When the ink is applied onto recording mediums of various types, such as polyolefin, PET, coated paper, and non-coated paper, the surface tension is preferably 20 mN/m or more, from the viewpoints of preventing bleeding and penetration of ink, and 30 mN/m or less, from the viewpoint of improving wetting property.

The ink composition of the invention thus adjusted is favorably used not only as an ink for printing but also as an inkjet recording ink. The ink composition is ejected onto a recording medium by an inkjet printer, and then the ejected ink composition is cured by irradiating a radiation ray, to perform recording.

The printed material obtained using the ink of the invention is superior in strength in the image region which is cured by irradiating a radiation ray such as an ultraviolet ray, and thus applicable to various uses other than formation of an image by ink, such as formation of an ink receiving layer (image region) of planographic printing plate.

### [Inkjet recording method and inkjet recording apparatus)

The inkjet recording method and the inkjet recording apparatus, to which the ink composition of the invention can favorably be applied, will now be described.

The inkjet recording method using the ink composition of the invention is an inkjet recording method comprising:
(i) ejecting the ink composition of the invention onto a recording medium; and
(ii) curing the ejected ink composition by irradiating a radiation ray.

By the inkjet recording method described above, an image is formed using the ink composition of the invention to obtain a print.

In the inkjet recording method, it is preferable to heat the ink composition so that the temperature thereof is 40°C to 80°C, adjusting the viscosity of the ink composition to be within 7mPa·s to 30mPa·s, and then ejecting the ink composition In this way, a high ejection stability can be achieved. Generally, radiation-curable ink compositions have higher viscosity than that of aqueous inks, and fluctuation in viscosity of the radiation-curable ink compositions is larger, due to variation in temperature during printing. Such fluctuation in viscosity of the ink composition significantly and directly influences the droplet size and the droplet ejection speed, causing deterioration in image quality. Therefore, it is necessary to keep the temperature of the ink composition as constant as possible, during printing. The range of the temperature of the ink composition to be controlled is preferably ± 5°C, more preferably ± 2°C, and still more preferably ± 1°C, from the preset temperature.

The inkjet recording apparatus is provided with a unit for stabilizing the temperature of the ink composition, which characterizes an aspect of the invention, and the portion where the temperature is to be controlled to a definite temperature include the whole piping system and all members in the region of from an ink tank (or an intermediate tank, if present) to a nozzle ejection face.

The method of controlling temperature is not particularly limited, but, for example, each piping unit is preferably provided with plural temperature sensors, and heating control is performed in accordance with the flow of ink composition and environmental temperature. In addition, the head unit to be heated is preferably thermally insulated or protected, for prevention of the environmental influences on the apparatus. It is preferable to insulate the heating unit from other units and minimize the heat capacity of the entire heating unit, for shortening the printer-start-up time required for heating or for reducing the loss in heat energy.

Irradiation conditions using a radiation ray will be now described. A basic irradiation method is disclosed in JP-A No. 60-132767. Specifically, two radiation sources are placed at both side of a head unit, and the head unit and the radiation sources are scanned in a shuttle mode. Irradiation is performed after a certain period of time from ejection of the ink composition. Further, curing of the ink composition is completed by irradiating with another radiation source that is not driven. WO 99/54415 discloses an irradiation method using an optical fiber, and a method of irradiating UV light to a recording region, in which the UV light is obtained from a collimated radiation source via a mirror surface provided on the side of head unit. These irradiation methods may be applied to the invention.

The radiation ray for irradiation is not particularly limited, as long as the radiation ray can impart energy to the aforementioned photo-acid generator (b) with which the photo-acid generator can be decomposed, and active radiation rays including X-ray, an ultraviolet ray, visible light, and electron beam can be used. Among these, an ultraviolet ray having a wavelength of 230 nm to 420 nm is preferable. As a light source, a polar or non-polar mercury lamp, metal halide lamp, xenon lamp, or a light-emitting diode having the above range of wavelength (UV-LED) may be used. In the case of using a UV-LED, plural diodes are used in such a manner that they are arranged in a straight line or in three dimensions, i.e., as a multi array, by means of energy power of the light-emitting chips.

It is also preferable in the invention that the ink composition is heated to define temperature, and the time period from ejection to irradiation is 0.01 second to 0.5 second, more preferably 0.01 second to 0.3 second, and still more preferably 0.01 second to 0.15 second. By controlling the time period from ejection to irradiation to be extremely short, the ejected ink can be prevented from bleeding before being cured. Also, exposure can be performed before the ink penetrates into the depth where the light cannot reach, even in the case of a porous recording medium, thus remaining of the unreacted monomers can be suppressed, thereby reducing odor.

The inkjet recording method described above and the ink composition of the invention provides a synergic effect when used in combination. Particularly effective is use of the ink composition having an ink viscosity of 35 mP·s to 500 mP·s at 25°C. By using such a recording method, dot diameter of the ejected ink composition can be kept constant at any recording mediums of different surface wetting property, thus improving the image quality.

For obtaining a color image, it is preferable that a color image having lower brightness precedes the one having higher brightness, in layering the color images. When a color image having a lower brightness is superimposed on the others, it becomes difficult for a radiation ray to reach the ink in the lower part, and problems tend to occur, such as inhibition of curing sensitivity, increase in the amount of residual monomer, generation of odor, or deterioration in adhesion. Although irradiation may be performed on all of the color images at the same time after ejection of all of the color inks, it is preferable to perform irradiation to every one color ink, each time a color image is formed, from the viewpoint of facilitating the curing.

The inkjet recording apparatus used in the present invention is not particularly limited, and commercially available inkjet-recording apparatuses can be used. In other words, the present invention can perform recording, that is, can obtain a print, by applying the ink composition of the present invention to a recording medium by an inkjet recording apparatus.

The print having an ink image formed using the ink composition of the present invention has the advantages that tackiness on the surface of the image is suppressed, and therefore even though the prints are laminated and stored, there is no concern of the generation of blocking.

### (Recording medium)

Recording mediums, to which the ink composition of the invention can be applied, are not particularly limited, and common papers such as non-coated and coated papers, various non-absorptive resin materials used in so-called soft packaging, and resin films formed from the non-absorptive resin materials into films can be used; and examples of the various plastic films include a PET film, an OPS film, an OPP film, an ONy film, a PVC film, a PE film, a TAC film, and the like. Examples of the other plastics for use as the recording medium material include polycarbonate, acrylic resins, ABS, polyacetal, PVA, rubbers, and the like. In addition, metals and glasses are also usable as the recording medium.

The ink composition of the present invention is resistant to heat shrinkage during hardening and superior in adhesion to the substrate (recording medium). Therefore, the ink composition of the present invention has an advantage of enabling formation of a high-definition image even on films that easily curl or deform due to shrinkage of ink at the time of curing or heat during curing reaction, for example, thermally shrinkable films such as a PET film, an OPS film, an OPP film, an ONy film, and a PVC film.

### [Examples]

The present invention is described in more specifically by the following Examples, but the invention is not limited to the embodiment in these Examples.

### [Example 1]

### «Preparation of pigment dispersion»

Each pigment dispersion 1 of yellow, magenta, cyan and black was prepared according to the method described below. The dispersion conditions were appropriately adjusted using a conventional dispersion apparatus such that particles of each pigment have an average particle diameter in a range of 0.2 µm to 0.3 µm, followed by filtration with a filter under heating.

| (Yellow pigment dispersion 1) | | |
|---|---|---|
| | C.I. pigment yellow 12 | 10 parts by weight |
| | Polymer dispersant (manufactured by Zeneca, Solsperse Series) | 5 parts by weight |
| | Triethylene glycol divinyl ether | 85 parts by weight |

| (Magenta pigment dispersion 1) | | |
|---|---|---|
| | C.I. pigment red 57:1 | 15 parts by weight |
| | Polymer dispersant (manufactured by Zeneca, Solsperse Series) | 5 parts by weight |
| | Triethylene glycol divinyl ether | 80 parts by weight |

| (Cyan pigment dispersion 1) | | |
|---|---|---|
| | C.I. pigment blue 15:3 | 20 parts by weight |
| | Polymer dispersant (manufactured by Zeneca, Solsperse Series) | 5 parts by weight |
| | Triethylene glycol divinyl ether | 75 parts by weight |

| (Black pigment dispersion 1) | | |
|---|---|---|
| | C.I. pigment black 7 | 20 parts by weight |
| | Polymer dispersant (manufactured by Zeneca, Solsperse Series) | 5 parts by weight |
| | Triethylene glycol divinyl ether | 75 parts by weight |

### «Preparation of ink»

The following components were mixed and filtered with a filter to prepare each color ink of yellow, magenta, cyan and black.

| (Yellow ink 1) | | |
|---|---|---|
| | (a) Tertiary amine compound (A-1) having cationically polymerizable group | 5 g |
| | (b) Photo-acid generator: | |
| | Compound Example (b-24)/(b-29)=1/2 | 5 g |
| | (c) Cationically polymerizable compound: | |
| | CELLOXIDE 2021 (epoxy compound, manufactured by Daicel UCB) | 35 g |
| | OXT-221 (oxetane compound, manufactured by Toagosei Co., Ltd.) | 55 g |
| | Colorant (pigment dispersion): Yellow pigment dispersion 1 | 5 g |

| (Magenta ink 1) | | |
|---|---|---|
| | (a) Tertiary amine compound (A-1) having cationically polymerizable group | 5 g |
| | (b) Photo-acid generator: | |
| | Compound Example (b-24)/(b-29)=1/2 | 5 g |
| | (c) Cationically polymerizable compound: | |
| | CELLOXIDE 2021 (epoxy compound, manufactured by Daicel UCB) | 35 g |
| | OXT-221 (oxetane compound, manufactured by Toagosei Co., Ltd.) | 55 g |
| | Colorant (pigment dispersion): Magenta pigment dispersion 1 | 5 g |

| (Cyan ink 1) | | |
|---|---|---|
| | (a) Tertiary amine compound (A-1) having cationically polymerizable group | 5 g |
| | (b) Photo-acid generator: | |
| | Compound Example (b-24)/(b-29)=1/2 | 5 g |
| | (c) Cationically polymerizable compound: | |
| | CELLOXIDE 2021 (epoxy compound, manufactured by Daicel UCB) | 35 g |
| | OXT-221 (oxetane compound, manufactured by Toagosei Co., Ltd.) | 55 g |
| | Colorant (pigment dispersion): Cyan pigment dispersion 1 | 5 g |

| (Black ink 1) | | |
|---|---|---|
| | (a) Tertiary amine compound (A-1) having cationically polymerizable group | 5 g |
| | (b) Photo-acid generator: | |
| | Compound Example (b-24)/(b-29)=1/2 | 5 g |
| | (c) Cationically polymerizable compound: | |
| | CELLOXIDE 2021 (epoxy compound, manufactured by Daicel UCB) | 35 g |
| | OXT-221 (oxetane compound, manufactured by Toagosei Co., Ltd.) | 55 g |
| | Colorant (pigment dispersion): Black pigment dispersion 1 | 5 g |
| | Sensitizer: 9,10-Butoxyanthracene | 0.5 g |

### «Inkjet image recording» (Evaluation of multicolor image)

Recording was conducted to a recording medium using a commercially available inkjet recording apparatus having piezo type inkjet nozzles. The ink supply system was provided with a main tank, a supply piping, an inkjet supply tank just before an inkjet head, a filter and a piezo type inkjet head, and a portion of from the ink supply tank to the inkjet head was heat insulated and heated. Temperature sensors were provided in the vicinity of the ink supply tank and nozzles of the inkjet head, and temperature was controlled such that the nozzle part was always maintained at 70°C±2°C. The piezo type inkjet head was driven such that multisize dots of 8pl to 30 pl could be ejected at a resolution of 720x720 dpi. After injection, UV-A light was concentrated to provide exposure side illumination of 100 mW/cm², and the exposure system, main scanning rate and ejecting frequency were adjusted such that irradiation was started 0.1 second later after ejecting of an ink on the recording medium. Furthermore, exposure time was variable, and exposure energy was irradiated. The term "dpi" used herein means the number of dots per 2.54 cm.

Each color ink (yellow ink 1, magenta ink 1, cyan ink 1 and black ink 1) prepared above was ejected in the order of black, cyan, magenta, and yellow at an environmental temperature of 25°C, and an ultraviolet ray was irradiated to every one color. Exposure was conducted with a flat total exposure energy per one color of 300 mJ/cm² as an energy that an ink completely cures, such that tacky adhesion adhesion by touch feeling is eliminated. When each color image was recorded on a sand-grained aluminum support, a surface-treated transparent biaxially stretched polypropylene film having imparted thereto printing suitability, a soft vinyl chloride sheet, a cast coat paper or a commercially available recycled paper as a recording medium, a high resolution image having no dot bleeding was obtained in each recording medium. Furthermore, even in a high quality paper, an ink was sufficiently cured without penetrating the paper, and odor due to an unreacted monomer was not almost recognized. Moreover, the ink recorded on the film had sufficient flexibility, and even though the film was bent, cracks were not generated in the ink, and tackiness on the surface by finger feeling was not observed. Regarding the adhesion of the image, there was no problem in an adhesion test by cellophane tape peeling.

### [Examples 2 to 10 and Comparative Examples 1 and 2]

### «Preparation of ink»

Magenta ink compositions (magenta inks 2 to 10) of Examples 2 to 10 were prepared in a similar manner to the process in the preparation of the magenta ink 1 in Example 1 except that each component used in the magenta ink 1 in Example 1 was changed to the following each component.

Furthermore, an ink composition (magenta ink 11) of Comparative Example 1 was obtained in a similar manner to that in Example 10 except that the tertiary amine compound (a) having a cationically polymerizable group was not contained in the ink composition of Example 10. An ink composition (magenta ink 12) of Comparative Example 2 was obtained in a similar manner to that in Example 10 except that comparative compound 1 (1,2,2,6,6-pentamethylpiperidine) was added as the tertiary amine compound in place of the polymerizable amine compound (a).

| (Magenta inks 2 to 10) | | |
|---|---|---|
| | (a) Tertiary amine compound having cationically polymerizable group (compound shown in Table 1) | 5 g |
| | (b) Photo-acid generator (compound shown in Table 1) | 8 g |
| | (c) Cationically polymerizable compound | 87 g |
| | (d) Colorant (the magenta pigment dispersion 1) | 5 g |

The detail of the cationically polymerizable monomer shown in Table 1 is as follows.

### Cationically polymerizable compound 1:

CELLOXIDE 2021 (epoxy: manufactured by Daicel UCB)/OXT-221 (oxetane: manufactured by Toagosei Co., Ltd.)=35/55 mixture

### Cationically polymerizable compound 2:

CELLOXIDE 3000 (epoxy: manufactured by Daicel UCB)/OXT-211 (oxetane: manufactured by Toagosei Co., Ltd.)=50/40 mixture

In the ink compositions prepared in the above Examples and Comparative Examples, viscosity of ink at an ejection temperature fell within a range of 7 mPa·s to 20 mPa·s.

### «Inkjet image recording» (Evaluation of one-color image)

Using the magenta inks 2 to 12 (Examples 2 to 10 and Comparative Examples 1 and 2) prepared above and the magenta ink 1 prepared in Example 1, magenta ink printing was conducted in a similar manner to that in Example 1.

### 1. Measurement of curing sensitivity

On an image face after irradiation with an ultraviolet ray, exposure energy amount (mJ/cm²) which eliminates tacky feeling was defined as curing sensitivity. The smaller value means higher sensitivity.

### 2. Evaluation of storage stability

After storing the prepared ink composition at 75%RH and 60°C for 3 days, viscosity of the ink was measured at an ejection temperature. Increase in ink viscosity is expressed by a viscosity ratio of (viscosity after storage)/(viscosity before storage). When viscosity does not change and the viscosity ratio is near 1.0, the storage stability is good. Where the viscosity ratio exceeds 1.5, clogging may occur during ejection, which is not preferred.

### 3. Evaluation of penetration with respect to commercially available recycled paper

Evaluation of penetration was made on an image printed on commercially available recycled paper according to the following standard.
A: Ink does not substantially penetrate into the paper, and odor of residual monomer is not recognized.
B: Ink slightly penetrates into the paper, and odor of residual monomer is slightly recognized.
C: Ink apparently penetrates up to the back of the paper, and odor of residual monomer is strong.

### 4. Evaluation of ink bleeding on PVC substrate

Evaluation of ink bleeding was made on an image printed on a surface-treated PVC substrate according to the following standard.
A: No bleeding is seen between the adjacent dots.
B: Dot slightly bleeds.
C: Dot bleeds, and image apparently blurs.

### 5. Evaluation of adhesion on PVC substrate

Regarding the printed image prepared above, a sample in which the printed face is not scratched at all, and a sample in which according to JIS K5400, 11 cuts are formed on the printed face with a distance of 1 mm vertically and horizontally, respectively, to form 100 cross-hatches 1 mm square, were prepared. Cellophane tape was adhered on the printed face of each sample, and rapidly peeled at an angle of 90°. The state of the printed image or cross-hatch unpeeled and remained was evaluated according to the following standard.
A: Peeling of printed image by cross-hatch test is not recognized at all.
B: In cross-hatch test, slight ink peeling is recognized, but where ink surface is not scratched, peeling is not almost recognized.
C: Peeling by cellophane tape is easily recognized in both conditions.

### 6. Evaluation of blocking property

To evaluate blocking property between the printed face and the back of a substrate when image-printed substrates were laminated and stored, 50 A4-size printed substrates were piled, and a load of 6 kg was applied to the laminate from the upper side thereof. After 24 hours at room temperature, the printed substrates were separated, and adhesion between the ink image and the adjacent substrate was evaluated according to the following standard.
A: Ink image is sufficiently cured, and adhesion to the adjacent substrate is not recognized.
B: Surface of ink image is slightly tacky, and slight sound is produced when peeled.
C: Surface of ink image is adhered to the adjacent substrate, and the ink image surface and the substrate are not separated.

Results of these performance evaluations are shown in Table 1 below.

**[TABLE 1]**

| | | (a) Polymerizable amine compound | (b) Photo-acid generator | (c) Cationically polymerizable compound | Evaluation of bleeding on PVC substrate | Adhesion to PVC | Curing sensitivity | Storage stability of ink | Blocking property |
|---|---|---|---|---|---|---|---|---|---|
| Example 1 | Magenta ink 1 | A-1 | b-24/b-29 (1/2) | 1 | A | A | 300 | 1.0 | A |
| Example 2 | Magenta ink 2 | A.1 | b-3 | 1 | A | A | 300 | 1.0 | A |
| Example 3 | Magenta ink 3 | A-2 | b-3 | 1 | A | A | 320 | 1.0 | B |
| Example 4 | Magenta ink 4 | A-3 | b-3 | 1 | A | A | 300 | 1.0 | A |
| Example 5 | Magenta ink 5 | A-8 | b-3 | 1 | A | A | 300 | 1.0 | A |
| Example 6 | Magenta ink 6 | A-11 | b-3 | 1 | A | A | 300 | 1.0 | A |
| Example 7 | Magenta ink 7 | A-15 | b-24 | 2 | A | A | 310 | 1.0 | A |
| Example 8 | Magenta ink 8 | A-24 | b-24 | 2 | A | A | 300 | 1.0 | A |
| Example 9 | Magenta ink 9 | A-28 | b-24 | 2 | A | A | 330 | 1.0 | B |
| Example 10 | Magenta ink 10 | A-31 | b-24 | 2 | A | A | 300 | 1.0 | A |
| Comparative Example 1 | Magenta ink 11 | None | b-24 | 1 | A | A | 300 | 1.7 | A |
| Comparative Example 2 | Magenta ink 12 | Comparative compound 1 | b-24 | 1 | A | B | 330 | 1.1 | C |

From the results shown in Table 1, the ink composition containing (a) a tertiary amine compound having a cationically polymerizable group of the present invention could achieve storage stability and sensitivity, and could form a high quality image having good adhesion to a PVC substrate and having no ink bleeding. Furthermore, it became apparent that tackiness on the surface of an ink image is suppressed and sensitivity to blocking is greatly improved.

On the other hand, in the ink composition of Comparative Example 1 to which (a) the polymerizable amine compound was not added, the viscosity of an ink greatly increases, and there exists the problem in storage stability. In Comparative Example 2 in which the comparative compound 1 (1,2,2,6,6-pentamethylpiperidine) as an amine compound which does not have a polymerizable group was added in place of the polymerizable amine compound (a), sensitivity and storage stability are improved, but the surface of an ink image is tacky, and blocking property deteriorates.

According to the present invention, an ink composition in which generation of tackiness on the surface of an image formed is effectively suppressed while maintaining curing sensitivity to irradiation with a radiation ray, blocking is not generated even in the case of laminating prints after image formation, and ejection property in applying to an inkjet apparatus is good can be provided.

## Claims

1. An ink composition comprising (a) a tertiary amine compound having a hindered amine structure as a tertiary amine structure, and having a cationically polymerizable group comprising a vinyl ether group, an epoxy group or an oxetane group, (b) a photo-acid generator, and (c) a cationically polymerizable compound.

2. The ink composition according to claim 1, wherein the tertiary amine compound having a cationically polymerizable group has a tertiary amine structure that is represented by any of the following formulae (I) to (VII): 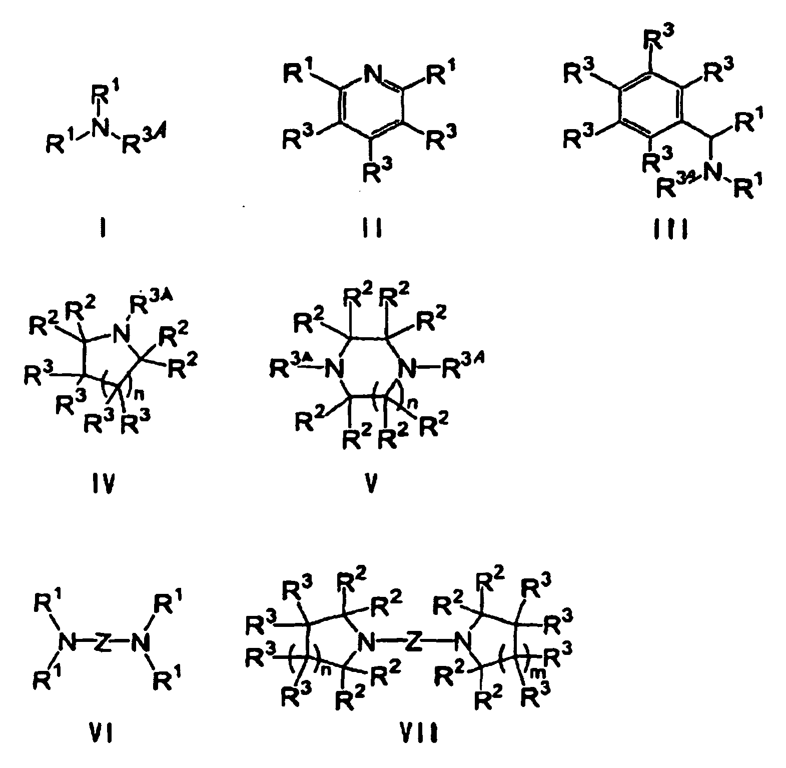 wherein in formulae (I) to (VII),
R¹ represents a branched alkyl group having 3 to 8 carbon atoms, a cyclic alkyl group having 3 to 10 carbon atoms, or an aralkyl group having 7 to 20 carbon atoms;
R² represents a linear alkyl group having 1 to 4 carbon atoms, a branched alkyl group having 3 to 6 carbon atoms, or an aryl group having 6 to 12 carbon atoms; or R¹ and R² bond to each other to form a cyclic structure;
R³ represents a hydrogen atom, a linear alkyl group having 1 to 20 carbon atoms, a branched alkyl group having 3 to 6 carbon atoms, a cyclic alkyl group having 3 to 10 carbon atoms, an aryl group having 6 to 12 carbon atoms, an aralkyl group having 7 to 20 carbon atoms, or an alkenyl group having 2 to 20 carbon atoms, and
R^{3A} represents a linear alkyl group having 1 to 20 carbon atoms, a branched alkyl group having 3 to 6 carbon atoms, a cyclic alkyl group having 3 to 10 carbon atoms, an aryl group having 6 to 12 carbon atoms, an aralkyl group having 7 to 20 carbon atoms, or an alkenyl group having 2 to 20 carbon atoms;
Z represents a divalent organic group comprising a hydrocarbon; n and m each represent an integer of 1 to 3;
and the tertiary amine structure and the cationically polymerizable group are bonded to each other directly or through a connecting group.

3. The ink composition according to claim 1, further comprising a colorant (d).

4. The ink composition according to any one of claims 1 to 3, for use in inkjet.

5. The ink composition according to claim 1, wherein the content of (a) the tertiary amine compound having a cationically polymerizable group is from 0.01 % by weight to 25 % by weight, and the content of (c) the cationically polymerizable compound is from 30% by weight to 90 % by weight.

6. The ink composition according to claim 1, comprising (c) two or more cationically polymerizable compounds selected from an oxetane compound, an epoxy compound and a vinyl ether compound.

7. The ink composition according to claim 1, wherein the tertiary amine compound (a) having a cationically polymerizable group has a vinyl ether group.

8. The ink composition according to claim 1, wherein the tertiary amine compound (a) having a cationically polymerizable group has an epoxy group or an oxetane group.

## Patentansprüche

1. Tintenzusammensetzung, umfassend (a) eine tertiäre Aminverbindung, die als eine tertiäre Aminstruktur eine gehinderte Aminstruktur aufweist und die eine kationisch polymerisierbare Gruppe, die eine Vinylethergruppe, eine Epoxygruppe oder eine Oxetangruppe umfasst, aufweist, (b) einen Foto-Säure-Bildner und (c) eine kationisch polymerisierbare Verbindung.

2. Tintenzusammensetzung gemäß Anspruch 1, worin die tertiäre Aminverbindung, die eine kationisch polymerisierbare Gruppe aufweist, eine tertiäre Aminstruktur aufweist, die durch irgendeine der folgenden Formeln (I) bis (VII) dargestellt wird: 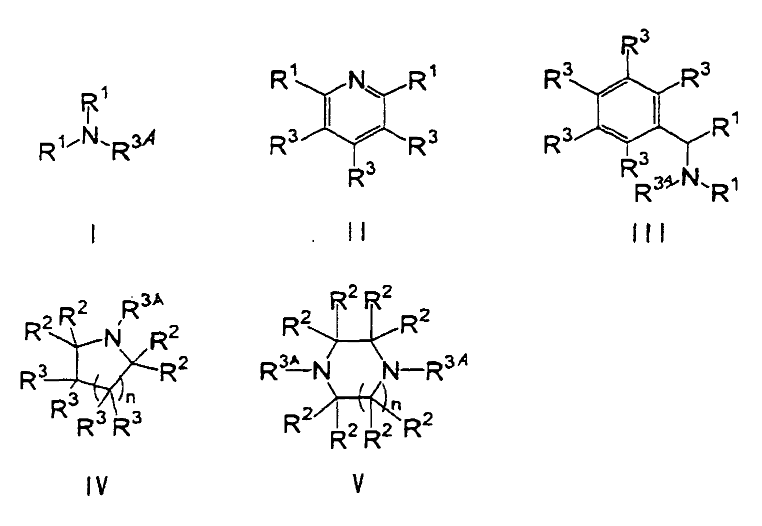 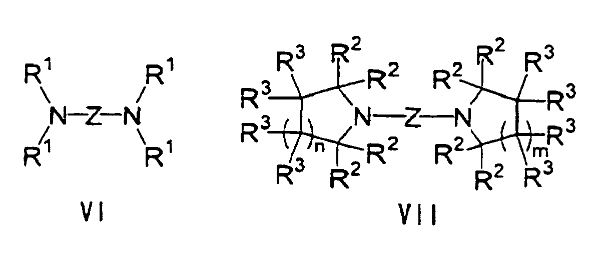 worin in den Formeln (I) bis (VII)
R¹ eine verzweigte Alkylgruppe mit 3 bis 8 Kohlenstoffatomen, eine cyclische Alkylgruppe mit 3 bis 10 Kohlenstoffatomen oder eine Aralkylgruppe mit 7 bis 20 Kohlenstoffatomen darstellt;
R² eine geradkettige Alkylgruppe mit 1 bis 4 Kohlenstoffatomen, eine verzweigte Alkylgruppe mit 3 bis 6 Kohlenstoffatomen oder eine Arylgruppe mit 6 bis 12 Kohlenstoffatomen darstellt; oder R¹ und R² miteinander verbunden sind, um eine cyclische Struktur zu bilden;
R³ ein Wasserstoffatom, eine geradkettige Alkylgruppe mit 1 bis 20 Kohlenstoffatomen, eine verzweigte Alkylgruppe mit 3 bis 6 Kohlenstoffatomen, eine cyclische Alkylgruppe mit 3 bis 10 Kohlenstoffatomen, eine Arylgruppe mit 6 bis 12 Kohlenstoffatomen, eine Aralkylgruppe mit 7 bis 20 Kohlenstoffatomen oder eine Alkenylgruppe mit 2 bis 20 Kohlenstoffatomen darstellt; und
R^{3A} eine geradkettige Alkylgruppe mit 1 bis 20 Kohlenstoffatomen, eine verzweigte Alkylgruppe mit 3 bis 6 Kohlenstoffatomen, eine cyclische Alkylgruppe mit 3 bis 10 Kohlenstoffatomen, eine Arylgruppe mit 6 bis 12 Kohlenstoffatomen, eine Aralkylgruppe mit 7 bis 20 Kohlenstoffatomen oder eine Alkenylgruppe mit 2 bis 20 Kohlenstoffatomen darstellt;
Z eine divalente organische Gruppe darstellt, die einen Kohlenwasserstoff umfasst; n und m jeweils eine ganze Zahl von 1 bis 3 darstellen;
und die tertiäre Aminstruktur und die kationisch polymerisierbare Gruppe direkt aneinander oder durch eine Verknüpfungsgruppe gebunden sind.

3. Tintenzusammensetzung gemäß Anspruch 1, ferner umfassend ein Färbemittel (d).

4. Tintenzusammensetzung gemäß irgendeinem der Ansprüche 1 bis 3 zur Verwendung in der Tintenstrahlaufzeichnung.

5. Tintenzusammensetzung gemäß Anspruch 1, worin der Gehalt der (a) tertiären Aminverbindung, die eine kationisch polymerisierbare Gruppe aufweist, 0,01 bis 25 Gew.% beträgt und der Gehalt der (c) kationisch polymerisierbaren Verbindung 30 bis 90 Gew.% beträgt.

6. Tintenzusammensetzung gemäß Anspruch 1, umfassend (c) zwei oder mehr kationisch polymerisierbare Verbindungen, ausgewählt aus Oxetanverbindungen, Epoxyverbindungen und Vinyletherverbindungen.

7. Tintenzusammensetzung gemäß Anspruch 1, worin die tertiäre Aminverbindung (a), die eine kationisch polymerisierbare Gruppe aufweist, eine Vinylethergruppe aufweist.

8. Tintenzusammensetzung gemäß Anspruch 1, worin die tertiäre Aminverbindung (a), die eine kationisch polymerisierbare Gruppe aufweist, eine Epoxygruppe oder eine Oxetangruppe aufweist.

## Revendications

1. Composition d'encre comprenant (a) un composé amine tertiaire ayant une structure d'amine encombrée comme structure d'amine tertiaire, et ayant un radical polymérisable de manière cationique comprenant un radical vinyléther, un radical époxy ou un radical oxétanne, (b) un photogénérateur d'acide, et (c) un composé polymérisable de manière cationique.

2. Composition d'encre selon la revendication 1, où le composé amine tertiaire ayant un radical polymérisable de manière cationique présente une structure d'amine tertiaire qui est représentée par l'une quelconque des formules (I) à (VII) suivantes : 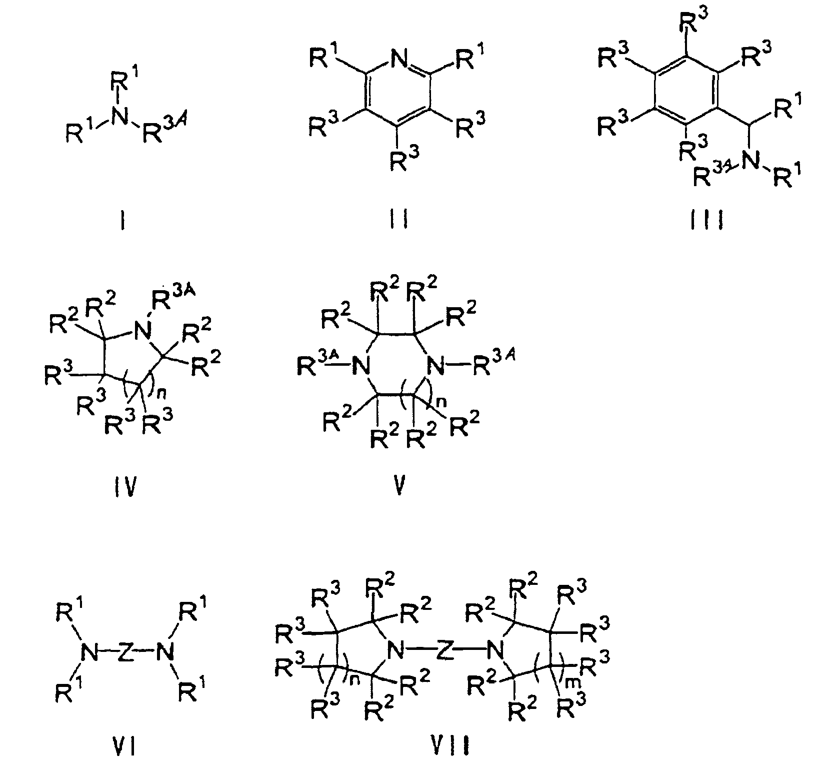 où dans les formules (I) à (VII),
R¹ représente un radical alkyle ramifié ayant 3 à 8 atomes de carbone, un radical alkyle cyclique ayant 3 à 10 atomes de carbone, ou un radical aralkyle ayant 7 à 20 atomes de carbone ;
R² représente un radical alkyle linéaire ayant 1 à 4 atomes de carbone, un radical alkyle ramifié ayant 3 à 6 atomes de carbone, ou un radical aryle ayant 6 à 12 atomes de carbone ; ou R¹ et R² sont liés l'un à l'autre pour former une structure cyclique ;
R³ représente l'atome d'hydrogène, un radical alkyle linéaire ayant 1 à 20 atomes de carbone, un radical alkyle ramifié ayant 3 à 6 atomes de carbone, un radical alkyle cyclique ayant 3 à 10 atomes de carbone, un radical aryle ayant 6 à 12 atomes de carbone, un radical aralkyle ayant 7 à 20 atomes de carbone, ou un radical alcényle ayant 2 à 20 atomes de carbone, et
R^{3A} représente un radical alkyle linéaire ayant 1 à 20 atomes de carbone, un radical alkyle ramifié ayant 3 à 6 atomes de carbone, un radical alkyle cyclique ayant 3 à 10 atomes de carbone, un radical aryle ayant 6 à 12 atomes de carbone, un radical aralkyle ayant 7 à 20 atomes de carbone, ou un radical alcényle ayant 2 à 20 atomes de carbone ;
Z représente un radical organique bivalent comprenant un hydrocarbure ;
n et m représentent chacun, un entier allant de 1 à 3 ;
et la structure d'amine tertiaire et le radical polymérisable de manière cationique sont liés l'un à l'autre directement ou par un radical de connexion.

3. Composition d'encre selon la revendication 1, comprenant en outre, un colorant (d).

4. Composition d'encre selon l'une quelconque des revendications 1 à 3, à utiliser en jet d'encre.

5. Composition d'encre selon la revendication 1, où la teneur en (a) le composé amine tertiaire ayant un radical polymérisable de manière cationique se situe dans l'intervalle allant de 0,01% en poids à 25% en poids, et la teneur en (c) le composé polymérisable de manière cationique se situe dans l'intervalle allant de 30% en poids à 90% en poids.

6. Composition d'encre selon la revendication 1, comprenant (c) deux ou plusieurs composés polymérisables de manière cationique choisis parmi un composé oxétanne, un composé époxy et un composé vinyléther.

7. Composition d'encre selon la revendication 1, où le composé amine tertiaire (a) ayant un radical polymérisable de manière cationique comprend un radical vinyléther.

8. Composition d'encre selon la revendication 1, où le composé amine tertiaire (a) ayant un radical polymérisable de manière cationique comprend un radical époxy ou un radical oxétanne.
